(19) Europäisches Patentamt
European Patent Office
Office européen des brevets

(11) EP 2 436 736 B1

(12) # EUROPEAN PATENT SPECIFICATION

(45) Date of publication and mention of the grant of the patent:
**28.03.2018 Bulletin 2018/13**

(21) Application number: **10780675.4**

(22) Date of filing: **25.05.2010**

(51) Int Cl.:
***B32B 27/28*** *(2006.01)* ***C08L 83/04*** *(2006.01)*
***C08L 83/14*** *(2006.01)*

(86) International application number:
**PCT/JP2010/059168**

(87) International publication number:
**WO 2010/137721 (02.12.2010 Gazette 2010/48)**

(54) **ORGANOSILOXANE RESIN COMPOSITION AND LAMINATE COMPRISING SAME**

ORGANOSILOXANHARZZUSAMMENSETZUNG UND LAMINAT DAMIT

COMPOSITION DE RÉSINE ORGANOSILOXANE ET STRATIFIÉ COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.05.2009 JP 2009126389**

(43) Date of publication of application:
**04.04.2012 Bulletin 2012/14**

(73) Proprietor: **Teijin Chemicals, Ltd.**
**Chiyoda-ku**
**Tokyo 100-0013 (JP)**

(72) Inventors:
- **NIIMI Ryo**
  **Tokyo 100-0013 (JP)**
- **YODA Takashi**
  **Tokyo 100-0013 (JP)**
- **MORITA Yume**
  **Tokyo 100-0013 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**WO-A1-2007/105741**
**JP-A- 2002 348 534**
**JP-A- 2004 075 970**
**JP-A- 2004 250 581**
**JP-A- 2006 255 928**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 436 736 B1

**Description**

TECHNICAL FIELD

The present invention relates to an organosiloxane resin composition and to a laminate whose surface is protected by an organosiloxane resin. More specifically, it relates to an organosiloxane resin composition which has excellent weatherability and abrasion resistance and to a laminate whose surface is protected by the organosiloxane resin.

BACKGROUND ART

Plastic materials are used in a wide variety of fields, making use of their impact resistance, lightweight and workability. Especially acrylic resin, polycarbonate resin and styrene-based resin which are transparent plastics are widely used as glass substitutes. However, it is known that they are unsatisfactory in terms of weatherability and decompose or deteriorate when they are used outdoors for a long time with the result that their physical properties and appearances are impaired. Further, these resins have such defects that their surfaces are readily scratched due to low abrasion resistance and also easily corroded by a solvent.

A trend toward the use of organic glass comprising a transparent plastic as a substrate for windows, especially car windows, making use of its lightweight and safety, can be seen recently. Weatherability as high as that of glass is required for this organic glass. Front glass must be protected from scratches by the operation of a wiper and a side window also must be protected from scratches when the window moves vertically. Thus, a high level of abrasion resistance is required for the organic glass. Since the organic glass is used outdoors, high durability against environmental variations and a high-temperature environment is also required for the organic glass.

To improve these defects, there have been made a large number of proposals for improving weatherability, durability and abrasion resistance by forming an acrylic resin layer on the surface of a substrate and further an organosiloxane resin layer on the acrylic resin layer (Patent Documents 1 to 4). It is known that, to obtain especially high weatherability out of these, ultraviolet absorptivity is provided to the acrylic resin layer and also ultraviolet absorptivity or ultraviolet reflectivity is provided to the organosiloxane resin layer.

For example, Patent Document 5 and Patent Document 6 disclose that the weathertability of a laminate is improved by adding an ultraviolet absorbent having a specific structure to an organosiloxane resin layer. However, in this case, since the organic ultraviolet absorbent itself is decomposed by ultraviolet light along the passage of time, the laminate is not fully satisfactory when it is used outdoors for a long time. Further, since an organic substance is contained in the organosiloxane resin layer, it is not easy to achieve both weatherability and abrasion resistance at the same time.

To improve this, Patent Documents 7 to 12 disclose that high abrasion resistance is provided by dispersing a metal oxide having ultraviolet absorptivity into an organosiloxane resin layer while a high level of weatherability is maintained. These documents enumerate titanium oxide, zinc oxide and cerium oxide as examples of the metal oxide having ultraviolet absorptivity. Since these metal oxides generally have photocatalytic activity, they promote not only the decomposition of the organosiloxane resin layer but also the decomposition of the acrylic resin layer and the substrate layer on their own, thereby deteriorating weatherability. This mechanism is as follows.

(1) When a photocatalyst is exposed to light having energy greater than the band gap width, electrons jump out of the surface of the photocatalyst, thereby forming holes having positive charge.
(2) The holes react with the hydroxide ion or oxygen of water to form active species such as a hydroxide radical or a super oxide anion.
(3) Since these active species have extremely high reactivity and especially the hydroxide radical has very large energy, it easily breaks a bond in the molecule constituting an organic compound to decompose the organic compound.

Patent Document 13 discloses a hard coating composition comprising a hydrolyzed and condensed product of an alkoxysilane, a hydrolyzed and condensed product of an alkoxysilane having high hydrophobic nature, and a metal oxide such as titanium oxide having an average particle diameter of 2 to 10 $\mu$m.

(Patent Document 1) JP-A 62-169832
(Patent Document 2) JP-A 59-109528
(Patent Document 3) JP-A 2002-206042
(Patent Document 4) JP-A 2004-131549
(Patent Document 5) JP-A 2004-018811
(Patent Document 6) JP No. 3648280
(Patent Document 7) JP-A 2003-306605

(Patent Document 8) JP-A 2004-238418
(Patent Document 9) JP-A 2006-70078
(Patent Document 10) JP-A 2006-104476
(Patent Document 11) JP-A 2008-94956
(Patent Document 12) JP-A 2008-231304
(Patent Document 13) JP-A 2002-348534

DISCLOSURE OF THE INVENTION

It is an object of the present invention to provide an organosiloxane resin composition which improves the weatherability, hot water resistance and durability (especially adhesion) against environmental variations and a high-temperature environment of a substrate, imparts excellent abrasion resistance and has high optical transparency, a coating composition comprising the same, and a laminate whose surface is protected by the resin composition.

The inventors of the present invention have conducted intensive studies on a thermosetting organosiloxane resin composition for coating. As a result, they have found that when a hydrolyzed and condensed product of an alkoxysilane (component B) and a hydrolyzed and condensed product of an alkoxysilane having high hydrophobic nature are added to an organosiloxane resin composition comprising a metal oxide (component D) as an ultraviolet absorbent, the penetration into a laminate comprising the resin composition of water is suppressed, the amount of a hydroxide radical formed from the metal oxide (component D) in the presence of water is reduced, and a laminate having excellent abrasion resistance and weatherability is obtained. The present invention has been accomplished based on this finding.

The subject-matter of the present invention is defined in claims 1-11 as attached. Embodiments described herein which are not covered by the claims merely serve to illustrate the technical context of the present invention. That is, according to the present disclosure, there are provided:

1. An organosiloxane resin composition comprising:

(A) colloidal silica (component A);
(B) a hydrolyzed and condensed product of an alkoxysilane represented by the following formula (B) (component B):

$$R^1_m R^2_n Si(OR^3)_{4-m-n} \qquad (B)$$

(wherein $R^1$ and $R^2$ are each independently an alkyle group having 1 to 4 carbon atoms or vinyl group, all of which may be substituted by at least one group selected from the group consisting of methacryloxy group, amino group, glycidoxy group and 3,4-epoxycyclohexyl group, $R^3$ is an alkyl group having 1 to 4 carbon atoms, m and n are each independently an integer of 0, 1 or 2, and (m+n) is an integer of 0, 1 or 2.);
(C) a hydrolyzed and condensed product of an alkoxysilane represented by the following formula (C) (component C):

$$R^4_j R^5_k Si(OR^6)_{4-j-k} \qquad (C)$$

(wherein $R^4$ is an aromatic group having 6 to 12 carbon atoms which may be substituted, alicyclic hydrocarbon group having 3 to 12 carbon atoms which may be substituted, or alkyl group having 1 to 20 carbon atoms which is substituted by a fluorine atom, $R^5$ is an alkyl group having 1 to 4 carbon atoms or vinyl group, all of which may be substituted by at least one group selected from the group consisting of methacryloxy group, amino group, glycidoxy group and 3,4-epoxycyclohexyl group, $R^6$ is an alkyl group having 1 to 4 carbon atoms, j is an integer of 1, 2 or 3, k is an integer of 0, 1 or 2, and (j+k) is an integer of 1, 2 or 3.); and
(D) a metal oxide (component D), wherein the content of the component A is 10 to 59.9 wt% in terms of $SiO_2$, the content of the component B is 40 to 89.9 wt% in terms of $R^1_m R^2_n SiO_{(4-m-n)/2}$, and the content of the component C is 0.1 to 18 wt% in terms of $R^4_j R^5_k SiO_{(4-j-k)/2}$ based on 100 wt% of the total of the components A to C, and the content of the component D is 0.1 to 15 parts by weight based on 100 parts by weight of the total of the components A to C.

2. The resin composition in the above paragraph 1, wherein the component B is a hydrolyzed and condensed product of an alkoxysilane represented by the following formula (B) and the component C is a hydrolyzed and condensed product of an alkoxysilane represented by the following formula (C).

$$R^1_m R^2_n Si(OR^3)_{4-m-n} \qquad (B)$$

(wherein $R^1$, $R^2$ and $R^3$ are each independently an alkyl group having 1 to 4 carbon atoms, m and n are each independently an integer of 0, 1 or 2, and (m+n) is an integer of 0, 1 or 2.)

$$R^4_jR^5_kSi(OR^6)_{4-j-k} \qquad (C)$$

(wherein $R^4$ is an aryl group having 6 to 12 carbon atoms or alkyl group having 1 to 20 carbon atoms which is substituted by a fluorine atom, $R^5$ and $R^6$ are each independently an alkyl group having 1 to 4 carbon atoms, j is an integer of 1, 2 or 3, k is an integer of 0, 1 or 2, and (j+k) is an integer of 1, 2 or 3.).

3. The resin composition in the above paragraph 1, wherein the content of the component A is 10 to 39.5 wt% in terms of $SiO_2$, the content of the component B is 60 to 89.5 wt% in terms of $R^1_mR^2_nSiO_{(4-m-n)/2}$, the content of the component C is 0.5 to 13 wt% in terms of $R^4_jR^5_kSiO_{(4-j-k)/2}$, and the content of the component D is 0.1 to 15 parts by weight based on 100 parts by weight of the total of the components A to C.

4. The resin composition in the above paragraph 1, wherein the metal oxide (component D) is zinc oxide, cerium oxide or titanium oxide.

5. The resin composition in the above paragraph 1, wherein the metal oxide (component D) is zinc oxide, cerium oxide or titanium oxide which is covered with an alumina layer, a zirconia layer, a silicon compound layer or a laminate thereof.

6. The resin composition in the above paragraph 1, wherein the metal oxide (component D) has an average particle diameter of 5 to 200 nm.

7. The resin composition in the above paragraph 1, wherein the metal oxide (component D) is prepared by dispersing slurry containing a metal oxide dispersed in water or an organic solvent by means of a medium mill filled with a medium having an average particle diameter of not more than 100 $\mu$m.

8. An organosiloxane resin coating composition comprising the resin composition of the above paragraph 1 and an alcohol having 1 to 6 carbon atoms and having a solids content of 5 to 70 wt%.

9. The resin coating composition in the above paragraph 8 which further comprises 0.01 to 10 parts by weight of a curing catalyst (component E) based on 100 parts by weight of the total of the components A to C.

10. A laminate comprising a substrate, a first layer obtained by thermosetting an acrylic resin composition, and a second layer obtained by thermosetting the resin composition of the above paragraph 1, wherein they are formed in this order.

11. The laminate in the above paragraph 10, wherein the contact angle of water on the surface of the second layer is 85° or more.

12. The laminate in the above paragraph 10 which further comprises a colored layer, wherein the substrate, the colored layer, the first layer and the second layer are formed in this order.

13. The laminate in the above paragraph 10 which further comprises a colored layer, wherein the substrate, the first layer, the second layer and the colored layer are formed in this order.

BRIEF DESCRIPTION OF THE DRAWINGS

Fig. 1 is a schematic plan view of a polycarbonate resin laminate having a colored layer according to the present invention.

Explanation of Reference Numerals

1 a polycarbonate resin laminate comprising a colored layer, a first layer and a second layer
2 a polycarbonate resin laminate comprising a first layer and a second layer

BEST MODE FOR CARRYING OUT THE INVENTION

The technical context of the present disclosure will be described in more detail hereinunder.

(organosiloxane resin composition)

(colloidal silica: component A)

The colloidal silica (component A) is preferably prepared by dispersing silica fine particles having a diameter

of preferably 5 to 200 nm, more preferably 10 to 80 nm in water or an organic solvent in a colloidal state.

The colloidal silica (component A) may be either water dispersible or organic solvent dispersible, preferably water dispersible. In the case of water dispersible colloidal silica, it is considered that a laminate having excellent abrasion resistance is obtained because a large number of hydroxyl groups are existent on the surface of each silica fine particle and firmly bonded to an alkoxysilane hydrolysate or a condensate thereof.

The water dispersible colloidal silica is further divided into acid aqueous solution dispersible colloidal silica and basic aqueous solution dispersible colloidal silica. Although either one of the acid aqueous solution dispersible colloidal silica and the basic aqueous solution dispersible colloidal silica may be used as the water dispersible colloidal silica, the acid aqueous solution dispersible colloidal silica is preferred from the viewpoints of a wide choice of curing catalysts and the realization of the appropriate hydrolysis and condensation states of trialkoxysilanes.

Commercially available products of the colloidal silica (component A) dispersed in an acid aqueous solution include the Snowtex O of Nissan Chemical Industries, Ltd. and the Cataloid SN30 of Catalysts & Chemicals Industries Co., Ltd., commercially available products dispersed in a basic aqueous solution include the Snowtex 30 and Snowtex 40 of Nissan Chemical Industries, Ltd. and the Cataloid S30 and Cataloid S40 of Catalysts & Chemicals Industries Co., Ltd., and commercially available products dispersed in an organic solvent include the MA-ST, IPA-ST, NBA-T, IBA-ST, EG-ST, XBA-ST, NPC-ST and DMAC-ST of Nissan Chemical Industries, Ltd.

(hydrolyzed and condensed product of alkoxysilane : component B)

The hydrolyzed and condensed product of an alkoxysilane (component B) is obtained through the hydrolytic condensation reaction of an alkoxysilane represented by the following formula (B).

$$R^1_m R^2_n Si(OR^3)_{4-m-n} \qquad (B)$$

In the above formula, $R^1$ and $R^2$ are each independently an alkyl group having 1 to 4 carbon atoms or vinyl group. These groups may be substituted by at least one group selected from the group consisting of methacryloxy group, amino group, glycidoxy group and 3,4-epoxycyclohexyl group. $R^1$ and $R^2$ are each independently preferably an alkyl group having 1 to 4 carbon atoms, particularly preferably methyl group.

$R^3$ is an alkyl group having 1 to 4 carbon atoms. $R^3$ is preferably an alkyl group having 1 to 3 carbon atoms, particularly preferably methyl group or ethyl group.

m and n are each independently an integer of 0, 1 or 2, and (m+n) is an integer of 0, 1 or 2. m and n are each preferably 0 or 1. (m+n) is preferably 1.

Examples of the alkoxysilane include tetramethoxysilane, tetraethoxysilane, tetra-n-propoxysilane, tetraisopropoxysilane, tetra-n-butoxysilane, tetraisobutoxysilane, methyltrimethoxysilane, methyltriethoxysilane, ethyltrimethoxysilane, isobutyltrimethoxysilane, vinyltrimethoxysilane, vinyltriethoxysilane, γ-methacryloxypropyltrimethoxysilane, β-(3,4-epoxycyclohexyl)ethyltrimethoxysilane, γ-glycidoxypropyltrimethoxysilane, γ-aminopropyltrimethoxysilane, γ-aminopropyltriethoxysilane, N-β(aminoethyl)-γ-aminopropyltrimethoxysilane, N-β(aminoethyl)-γ-aminopropyltriethoxysilane, dimethyldimethoxysilane, dimethyldiethoxysilane, vinylmethyldimethoxysilane, 3-methacryloxypropylmethyldimethoxysilane, 3-glycidoxypropylmethyldimethoxysilane and 3-aminopropylmethyldiethoxysilane. Out of these, alkyltrialkoxysilanes are preferred, and methyltrimethoxysilane and methyltriethoxysilane are particularly preferred. They may be used alone or in combination. It is also preferred to use a bifunctional alkoxysilane such as dimethyldimethoxysilane in order to provide flexibility to a cured film according to application purpose.

It is preferred that the organosiloxane resin composition for forming the second layer having excellent abrasion resistance should contain methyltrialkoxysilane in an amount of 70 to 100 wt% of the total of all alkoxysilanes of the formula (B).

(hydrolyzed and condensed product of alkoxysilane having high hydrophobic nature: component C)

The hydrolyzed and condensed product of an alkoxysilane having high hydrophobic nature (component C) is obtained through the hydrolytic condensation reaction of an alkoxysilane represented by the following formula (C).

$$R^4_j R^5_k Si(OR^6)_{4-j-k} \qquad (C)$$

In the above formula, $R^4$ is an aromatic group having 6 to 12 carbon atoms which may be substituted, alicyclic hydrocarbon group having 3 to 12 carbon atoms which may be substituted, or alkyl group having 1 to 20 carbon atoms which is substituted by a fluorine atom.

Examples of the aromatic group having 6 to 12 carbon atoms include aryl groups and aralkyl groups. The aryl groups having 6 to 12 carbon atoms include phenyl group and naphthyl group. The aralkyl groups having 6 to 12 carbon

atoms include benzyl group and phenylethyl group. They may be substituted by an alkyl group having 1 to 6 carbon atoms such as methyl group or ethyl group, or halogen atom.

Examples of the alicyclic hydrocarbon group having 3 to 12 carbon atoms include cycloalkyl groups having 3 to 12 carbon atoms and cycloalkenyl groups having 3 to 12 carbon atoms. The cycloalkyl groups having 3 to 12 carbon atoms include cyclopropyl group, cyclopentyl group and cyclohexyl group. The cycloalkenyl groups having 3 to 12 carbon atoms include cyclopropenyl group, cyclopentenyl group and cyclohexenyl group. They may be substituted by an alkyl group having 1 to 6 carbon atoms such as methyl group or ethyl group, or halogen atom.

Examples of the alkyl group having 1 to 20 carbon atoms which is substituted by a fluorine atom include groups whose some or all of the hydrogen atoms bonded to a carbon atom are substituted by a fluorine atom, such as methyl group, ethyl group, propyl group, pentyl group, hexyl group, decyl group and octadecyl group.

$R^5$ is an alkyl group having 1 to 4 carbon atoms or vinyl group. Examples of the alkyl group having 1 to 4 carbon atoms include methyl group, ethyl group, propyl group and butyl group. An alkyl group having 1 to 4 carbon atoms is preferred, and methyl group is particularly preferred. The alkyl group having 1 to 4 carbon atoms and the vinyl group may be substituted by at least one group selected from the group consisting of methacryloxy group, amino group, glycidoxy group and 3,4-epoxycyclohexyl group.

$R^6$ is an alkyl group having 1 to 4 carbon atoms. $R^6$ is preferably an alkyl group having 1 to 3 carbon atoms, particularly preferably methyl group or ethyl group.

j is an integer of 1, 2 or 3, k is an integer of 0, 1 or 2, and (j+k) is an integer of 1, 2 or 3. j is preferably an integer of 1 or 2, more preferably 1. k is preferably an integer of 0 or 1, more preferably 0.

Examples of the alkoxysilane of the formula (C) having high hydrophobic nature include benzyltrimethoxysilane, 5-(bicycloheptenyl)trimethoxysilane, bis(trimethylsilylmethyl)dimethoxysilane, t-butyldiphenylmethoxysilane, [2-(3-cyclohexenyl)ethyl]trimethoxysilane, cyclohexylethyldimethoxysilane, cyclohexyltrimethoxysilane, (3-cyclopentadienylpropyl)trimethoxysilane, cyclopentyltrimethoxysilane, dicyclopentyldimethoxysilane, 1,1-diethoxy-1-silacyclopenta-3-ene, dimethoxymethyl-3,3,3-trifluoropropylsilane, diphenyldimethoxysilane, diphenylmethylmethoxysilane, (heptadecafluoro-1,1,2,2-tetrahydrodecyl) trimethoxysilane, pentafluorophenylpropyltrimethoxysilane, phenethyltrimethoxysilane, phenyldimethylethoxysilane, phenylmethyldimethoxysilane, phenyltriethoxysilane, phenyltrimethoxysilane, p-tolyltrimethoxysilane, (tridecafluoro-1,1,2,2-tetrahydrooctyl)triethoxysilane, (3,3,3-trifluoropropyl)trimethoxysilane and triphenylethoxysilane. Out of these, alkyltrialkoxysilanes are preferred, and phenyltrimethoxysilane and (3,3,3-trifluaropropyl)trimethoxysilane are particularly preferred. They may be used alone or in combination.

The contents of the components A, B and C are determined from the long-term storage stability (shell life) of the resin composition, the transparency, abrasion resistance, adhesion and the existence of a crack of the obtained organosiloxane resin layer, and the effect of suppressing the penetration into the resin layer of water by the component C.

Based on 100 wt% of the total of the components A to C, the content of the component A is 10 to 59.9 wt% in terms of $SiO_2$, the content of the component B is 40 to 89.9 wt% in terms of $R^1_mR^2_nSiO_{(4-m-n)/2}$, and the content of the component C is 0.1 to 18 wt% in terms of $R^4_jR^5_kSiO_{(4-j-k)/2}$. Preferably, the content of the component A is 10 to 39.5 wt%, the content of the component B is 60 to 89.5 wt%, and the content of the component C is 0.5 to 13 wt%.

When the content of the component A is higher than 59.9 wt%, the transparency of the obtained resin layer may be impaired or the abrasion resistance of the resin layer may degrade. When the content of the component B is higher than 89.9 wt%, it may be difficult to suppress cracking at the time of thermosetting the resin composition. When the content of the component C is higher than 18 wt%, abrasion resistance degrades and adhesion to the first layer formed by thermosetting the acrylic resin composition as a base material lowers, whereby excellent durability may not be obtained. When the content of the component C is lower than 0.1 wt%, it is difficult to suppress the penetration into the organosiloxane resin layer of water, which is an object of the present patent.

The contact angle of water on the resin layer may be used as an index for evaluating the penetration into the organosiloxane resin layer of water. To suppress the decomposition of the organosiloxane resin layer by the photocatalytic activity of the metal oxide (component D) through the control of the penetration of water, the contact angle of water on the surface of the resin layer is preferably 85° or more, more preferably 86° or more.

(metal oxide: component D)

Examples of the metal oxide (component D) include zinc, oxide, cerium oxide and titanium oxide. Titanium oxide is particularly preferred because it is excellent in ultraviolet screening property, and cesium oxide is particularly preferred because it is excellent in the transparency of the obtained organosiloxane resin layer. They may be used according to the application purpose of the laminate. For example, titanium oxide may be used when high weatherability is required and cerium oxide may be used when importance is attached to design. They may be used alone or in combination.

The metal oxide (component D) is preferably prepared as slurry containing metal oxide fine particles dispersed in water or an organic solvent. This slurry may be either water dispersible or organic solvent dispersible. Organic solvent

dispersible slurry may be more advantageously used when the fact that when the water dispersible slurry is used, the water content of the organosiloxane resin composition increases and a thermoset film is apt to be whitened is taken into consideration.

Examples of the organic solvent dispersible slurry include Nanotec Slurry Series (CEANB, RTTPBC, RTSDNB and RTTDNB) of CIK Nanotec Co. , Ltd. , particulate titanium oxide slurry (710T, 760T and 780T) of Tayca Corporation, the NEOSUNVEIL Series UV shielding materials (PW-1010 and PW-6030) of Nikki Catalyst and Chemicals, Ltd., and the Sol Needlal Series cerium oxide sol(P-10, U-15 and B-10) of Taki Chemical Co., Ltd. These metal oxides may be used alone or in combination of two or more.

The surface of the metal oxide (component D) may be covered with an oxide or hydroxide of aluminum, titanium, zirconium, silicon, zinc or tin to improve its affinity for a dispersant and weatherability. Further, the surface of the metal oxide may be covered with at least one selected from organic treating agents for use in the coating field, for example, organic substances such as carboxylates, polyols, amines, siloxane compounds and silane coupling agents. Zinc oxide, cerium oxide or titanium oxide whose surface is covered with an alumina layer, zirconia layer, silicon compound layer or laminate thereof is preferred. In this case, dispersibility into a coating composition and the durability of a coating film can be further improved.

Preferably, the metal oxide (component D) has an average particle diameter obtained by a dynamic light scattering method for obtaining a particle diameter from the flickering of scattered light (time change) caused by the Brownian motion of particles of 5 to 200 nm. The average particle diameter measured by the dynamic light scattering method can be measured by using the FPAR-1000 fiber-optics particle size analyzer of Otsuka Electronics Co. , Ltd. When a metal oxide having an average particle diameter of more than 200 nm is existent in the resin composition, part of the metal oxide agglomerates in the course of forming a thermoset film, thereby causing the formation of scattered light which greatly degrades the transparency of the thermoset film. The average particle diameter of the metal oxide is preferably 100 nm or less. The lower limit of the average particle diameter is 5 nm or more as long as it is the average particle diameter of primary particles which do not agglomerate of the metal oxide. As the metal oxide (component D) may be used commercially available metal oxide slurry as described above.

The metal oxide (component D) is preferably obtained by dispersing a metal oxide having a primary particle diameter of 5 to 200 nm into water or an organic solvent and further dispersing the obtained slurry by means of a medium mill filled with a medium having an average particle diameter of 100 μm or less. Examples of the medium mill include a ball mill, oscillating mill, attriter and bead mill, out of which a bead mill which is suitable for filling a medium having an average particle diameter of 100 μm or less is preferred. Dispersion by means of a medium mill may be carried out in either one of batch, continuous, circulation and multiple transit manners. Although an almost spherical medium such as ball or bead, cylindrical medium such as rod, and others having an arbitrary shape may be used, an almost spherical medium is preferred in order to suppress the chipping of metal oxide fine particles. As the material of the medium may be used steel, special steel (such as stainless steel or abrasion resistant steel), super hard alloy and ceramics (such as alumina and zirconia), out of which zirconia is preferred because it is rarely contaminated by metal-based impurities and has high milling efficiency at a high density.

Commercially available metal oxide slurry may have a large apparent particle diameter due to secondary agglomeration even in the case of metal oxide fine particles having an average primary particle diameter of less than 100 nm. A metal oxide marketed as a powder often agglomerates secondarily or settles out when it is dispersed into water or an organic solvent as it is. Therefore, to achieve an average particle diameter of 5 to 200 nm, a secondary agglomerate must be deflocculated by dispersing an agglomerate of the metal oxide fine particles by means of a medium mill. When the average particle diameter of the medium becomes too large, the mechanical impact force of the medium upon the metal oxide fine particles becomes too strong, whereby not only the deflocculation of the secondary agglomerate but also the chipping of primary particles occur. As a result, surface energy becomes high due to the formation of an unstable newly-formed surface on the surface of each primary particle, thereby promoting the re-agglomeration of primary particles. That is, since the apparent particle diameter of the metal oxide becomes large, the transparency of the thermoset film is impaired by scattered light generated in the thermoset film. Therefore, it is more preferred to use a medium having an average particle diameter of 50 μm or less.

The dispersion conditions of the medium mill differ according to the type of the apparatus, the size of the medium, and the types of the metal oxide and a dispersion solvent. When the output of the medium mill is too high or the dispersion time is too long, a dispersion failure is caused by the above chipping and when the output of the medium mill is too low and the dispersion time is too short, dispersion may become unsatisfactory.

The metal oxide slurry to be dispersed by means of the medium mill is preferably diluted with water, an alcohol such as methanol, ethanol, 1-propanol or 2-propanol, a polyhydric alcohol such as 1,2-propanediol, 1,3-propaneidol or 1,2,3-propanetriol, or an organic solvent (medium liquid) such as acetone, tetrahydrofuran, N,N-dimethylformamide or dimethyl sulfoxide. The concentration of the metal oxide (component D) is preferably 0.1 to 75 wt%, more preferably 0.2 to 50 wt%, much more preferably 0.3 to 40 wt%.

To disperse the metal oxide (component D) slurry by means of the medium mill, a dispersant may be optionally

used. The dispersant is desirably soluble in a medium liquid and suitable for use in coating compositions. When the medium liquid is water, phosphoric acid compounds such as sodium hexametaphosphate and sodium pyrophosphate, silicic acid compounds such as sodium silicate and potassium silicate, polycarboxylic acid compounds, aminoacid compounds, polyoxyethylene alkyl ethers and amino alcohol may be used as the dispersant. When the medium liquid is an organic solvent, polyoxyethylene alkyl ethers, sorbitan fatty acid esters, polyoxyethylene alkyl phosphates, fatty acid alkanol amides, polyether modified silicone oil, silicone resin and polyester-based resins may be used as the dispersant. These dispersants may be used alone or in combination of two or more. An antifoaming agent such as silicone compound or surfactant may be optionally added to the dispersant.

The content of the metal oxide (component D) which is the content of only the metal oxide (component D) excluding the surfactant, dispersant and dispersion solvent is 0.1 to 15 parts by weight, preferably 0.3 to 13 parts by weight, more preferably 0.5 to 10 parts by weight based on 100 parts by weight of the total of the components A, B and C. When the content of the metal oxide (component D) is lower than 0.1 part by weight, the ultraviolet absorptivity of the metal oxide can be rarely expected. When the content of the metal oxide (component D) is higher than 15 parts by weight, a tendency toward the local whitening of the organosiloxane resin layer at an end of the substrate as a base material becomes strong, thereby causing a bad appearance.

(other components)

An infrared screening agent, an infrared absorbent, an ultraviolet absorbent, an optical stabilizer, a dye, a pigment and a filler may be added to the resin composition as long as the object of the present invention is not impaired. An oligomer, polymer or copolymer obtained by polymerizing a single or multiple vinyl-based monomers, bifunctional monomers or cyclic monomers may be added in order to improve the flexibility and adhesion of the resin composition of the present invention. An acrylic polymer is particularly preferably added.

Further, an UV absorbing group-containing alkoxysilane may be used to improve the weatherability of the resin composition of the present invention. The UV absorbing group means a derivative group which serves as an ultraviolet absorbent and an ultraviolet absorbent group which is bonded to the silicon atom of a tri- or di-alkoxysiloxane. Preferred examples of the UV absorbing group-containing alkoxysilane include silanol group-reactive akoxysilyls and alkanoyloxysilyl alkyl ether adducts as aromatic ultraviolet absorbents disclosed by JP-A 57-021476, and alkoxysilylbenzotriazoles disclosed by US Patent No. 4,316,033 and US Patent No. 4,349,602. Out of these, alkoxysilylbenzophenone-based compounds are particularly preferred.

The alkoxysilylbenzophenone-based compounds include 2-hydroxy-4-(3-trialkoxysilylalkoxy)diphenyl ketones (the alkoxy is an alkyloxy group having 1 to 4 carbon atoms) and 2-trialkoxysiloxy-4-allyloxydiphenyl ketones (the alkoxy is an alkyloxy group having 1 to 4 carbon atoms), out of which 2-hydroxy-4-(3-triethoxysilylpropoxy)diphenyl ketone, 2-hydroxy-4-(3-trimethoxysilylpropoxy)diphenyl ketone and 2-trimethoxysiloxy-4-allyloxydiphenyl ketone are preferred, and 2-hydroxy-4-(3-triethoxysilylpropoxy)diphenyl ketone is particularly preferred. The content of the UV absorbing group-containing alkoxysilane is preferably 0.1 to 10 parts by weight based on 100 parts by weight of the resin composition.

(preparation of organosiloxane resin composition)

The preferred preparation process of the resin composition of the present invention will be described hereinunder.

First of all, water is contained in an amount required for the hydrolytic reaction of an alkoxysilane of the formula (B) and an alkoxysilane of the formula (C) in a colloidal silica (component A) dispersion, and further an acid or a pH control agent is optionally added to adjust the pH of the agent to 0.5 to 4 which is suitable for the hydrolysis of the alkoxysilanes. The pH is more preferably adjusted to 1.0 to 3.5. The pH of the colloidal silica dispersion is mostly 2.5 to 4 in the case of commercially available acid aqueous solution dispersible colloidal silica. In this case, an acid or a pH control agent does not always need to be added for the control of pH but an acid is added to accelerate the proceeding of the hydrolytic reaction and carry out the reaction on a more acid side.

When basic aqueous solution dispersible colloidal silica is used, an acid must be used to control pH. Examples of the acid include inorganic acids such as hydrochloric acid, sulfuric acid, nitric acid, phosphoric acid, nitrous acid, perchloric acid and sulfamic acid, and organic acids such as formic acid, acetic acid, propionic acid, butyric acid, oxalic acid, succinic acid, maleic acid, lactic acid, paratoluenesulfonic acid, malonic acid, citric acid and benzoic acid. From the viewpoint of easy control of pH, hydrochloric acid, acetic acid, propionic acid, butyric acid and malonic acid are preferred, and hydrochloric acid and acetic acid are particularly preferred.

When an inorganic acid is used as the acid, it is used in a concentration of 0.0001 to 20N, preferably 0.001 to 16N. When an organic acid is used, it is used in an amount of 0.1 to 50 parts by weight, preferably 1 to 30 parts by weight based on 100 parts by weigh of the total of the alkoxysilanes.

Further, a trace amount of a salt or a base is also preferably added to control pH in order to make the system

a pH buffer solution. Examples of the salt or the base include alkali metal hydroxides such as lithium hydroxide, sodium hydroxide and potassium hydroxide, choline, benzyl trimethylammonium hydroxides, quaternary ammonium hydroxides such as tetrabutylammonium hydroxide, amines such as trimethylamine, ethylenediamine and butylamine, ammonia, and organic carboxylates of these bases.

The alkoxysilane of the formula (B) and the alkoxysilane of the formula (C) are then added to the colloidal silica whose pH has been adjusted as described above to carry out a hydrolytic condensation reaction.

Water required for the hydrolytic reaction of the alkoxysilanes is supplied from a water dispersible colloidal silica dispersion when it is used, and water may be further added as required. The amount of water is generally 1 to 10 equivalents, preferably 1.5 to 7 equivalents, more preferably 3 to 5 equivalents based on 1 equivalent of the total of the alkoxysilanes.

By adding the alkoxysilane of the formula (B) and the alkoxysilane of the formula (C) to the colloidal silica, the initial reaction becomes a reaction in a suitable pH state in the presence of an excessive amount of water, the hydrolytic reaction of these alkoxysilanes takes place first, and then a condensation reaction occurs gradually. Although the condensation reaction between hydrolysates of the alkoxysilanes does not occur, an environment in which a condensation reaction between the hydroxyl groups of the hydrolysates of the alkoxysilane and the hydroxyl group on the surface of the colloidal silica readily occurs is created. Thus, a coating agent becomes a homogeneous coating agent containing colloidal silica as a nucleus.

Since the conditions for the hydrolysis and condensation reactions of the alkoxysilanes change according to the types of the alkoxysilanes in use and the type and amount of the colloidal silica coexistent in the system, they cannot be specified flatly. The hydrolytic reaction of the alkoxysilanes is an exothermal reaction, and the temperature of the reaction system is desirably not higher than 60°C at maximum and preferably 20 to 60°C, more preferably 20 to 50°C, particularly preferably 20 to 40°C. The reaction time is generally 2 hours to several days. After the hydrolytic reaction is promoted fully under the above conditions, a condensation reaction is preferably carried out at 40 to 80°C for 2 hours to several days in order to stabilize the coating agent.

The alkoxysilane of the formula (B) is hydrolyzed by this reaction to become a hydrolysate represented by $R^1_mR^2_nSi(OH)_{4-m-n}$. The hydrophobic alkoxysilane of the formula (C) is hydrolyzed to become a hydrolysate represented by $R^4_jR^5_kSi(OH)_{4-j-k}$.

Si-OH formed from the alkoxysilane of the formula (B) and the hydrophobic alkoxysilane of the formula (C) undergoes a condensation reaction with Si-OH contained in the colloidal silica and Si-OH in the molecule of another alkoxysilane hydrolysate different from these molecules to form a Si-O-Si bond, and the formed condensate causes a condensation reaction with another Si-OH to form an Si-O-Si bond. The hydrolytic reaction and the condensation reaction are not complete and partially proceed.

There are suitable hydrolysis and condensation ratios for each resin composition. When the proceeding of the hydrolytic reaction is incomplete, a hair crack is produced by the evaporation of the alkoxysilanes as raw materials or the drastic proceeding of a curing reaction at the time of thermosetting. When the condensation reaction proceeds too far, the particle diameters of the silica fine particles contained in the coating composition (sol) become too large, thereby making difficult an appropriate crosslinking reaction at the time of thermosetting and thereby reducing abrasion resistance. The suitable hydrolysis and condensation ratios of the organosiloxane resin composition are described in detail in JP-A 2004-26979.

As for the timing of adding the hydrophobic alkoxysilane of the formula (C), both of the alkoxysilanes may be mixed together before the start of the hydrolytic reaction of the alkoxysilane of the formula (B), or the hydrophobic alkoxysilane of the formula (C) may be added to a resin coating composition comprising a curing catalyst and a solvent which will be described hereinafter after the end of the hydrolysis and condensation reactions of the alkxysilane of the formula (B). To suppress the reduction of the shelf life (the service life of the coating composition) due to the reactive functional group remaining in the resin composition and the deterioration of appearance such as a crack when the resin coating composition is applied and solidified, it is advantageous that the alkoxysilane of the formula (B) and the hydrophobic alkoxysilane of the formula (C) should be mixed together before the start of the hydrolytic reaction.

As for the timing of adding the metal oxide (component D) or slurry thereof, it may be added to and mixed with a colloidal silica dispersion as the component A before the start of the hydrolytic reaction of the alkoxysilanes, or it may be added to an organosiloxane resin composition comprising a curing catalyst and a solvent which will be described hereinafter after the end of the hydrolysis and condensation reactions of the alkoxysilanes. It is considered that the latter method is advantageous to carry out the hydrolysis and condensation reactions of the alkoxysilanes stably. Although the method of adding the metal oxide (component (D)) slurry is not particularly limited in the present invention, since the secondary agglomeration of the metal oxide occurs due to a solvent shock when the metal oxide slurry is added to a colloidal silica dispersion, an organosiloxane resin composition or another solvent quickly, it is preferred that the colloidal silica dispersion, the organosiloxane resin composition or another solvent should be added dropwise to the metal oxide slurry.

At least resin components which consist of the colloidal silica (component A) uniformly dispersed in a solvent,

a hydrolyzed and condensed product of the alkoxysilane (component B) and a hydrolyzed and condensed product of the alkoxysilane having high hydrophobic nature (component C), and a metal oxide component (component D) dispersed in a solvent are existent in the obtained organosiloxane resin composition.

(organosiloxane resin coating composition)

A resin coating composition is obtained by diluting the resin composition of the present invention with a solvent. The solvent used to dilute the resin composition must dissolve the resin composition stably. To this end, a solvent containing not less than 50 wt% of an alcohol is preferred. Examples of the alcohol include methanol, ethanol, 1-propanol, 2-propanol, 1-butanol, 2-butanol, 2-methyl-1-propanol, 2-ethoxyethanol, 4-methyl-2-pentanol and 2-butoxyethanol. A low-boiling point alcohol having 1 to 6 carbon atoms is preferred, and 2-propanol and 1-butanol are particularly preferred from the viewpoints of solubility, stability and coatability. These solvents may be used alone or in combination.

The resin coating composition also contains water which is contained in the water dispersible colloidal silica and does not take part in the hydrolytic reaction, a lower alcohol which is produced by the hydrolysis of the alkoxysilanes, an organic solvent of a dispersion medium when organic solvent dispersible colloidal silica is used, and an acid which is added to control the pH of the organosiloxane resin coating composition.

Examples of the acid used to control pH include inorganic acids such as hydrochloric acid, sulfuric acid, nitric acid, phosphoric acid, nitrous acid, perchloric acid and sulfamic acid, and organic acids such as formic acid, acetic acid, propionic acid, butyric acid, oxalic acid, succinic acid, maleic acid, lactic acid, paratoluenesulfonic acid, malonic acid , citric acid and benzoic acid. From the viewpoint of easy control of pH, organic carboxylic acids such as formic acid, acetic acid, propionic acid, butyric acid, oxalic acid, succinic acid, maleic acid, malonic acid, citric acid and benzoic acid are preferred.

The pH of the resin coating composition of the present invention is preferably 4.5 to 6.5, more preferably 5.0 to 6.0. pH can be controlled by the contents of the acid and a curing catalyst which will be described hereinafter. By controlling pH, the gelation of the resin coating composition at normal temperature is prevented, thereby making it possible to improve storage stability.

Other solvents which must be miscible with water/alcohol include ketones such as acetone, methyl ethyl ketone and methyl isobutyl ketone, ethers such as tetrahydrofuran, 1,4-dioxane and 1,2-dimethoxyethane, and esters such as ethyl acetate and ethoxyethyl acetate.

The solvent is used in an amount of preferably 50 to 2,000 parts by weight, more preferably 150 to 1,400 parts by weight based on 100 parts by weight of the resin composition. The resin coating composition has a solids content of preferably 5 to 70 wt%, more preferably 7 to 40 wt%.

Therefore, it is preferred that the resin coating composition of the present invention should contain the above-described resin composition and an alcohol having 1 to 6 carbon atoms and have a solids content of 5 to 70 wt%.

Preferably, the resin coating composition of the present invention further comprises a curing catalyst as a catalyst when it is applied to a plastic substrate. Examples of the catalyst include alkali metal salts such as lithium salts, sodium salts and potassium salts of a carboxylic acid such as formic acid, propionic acid, butyric acid, lactic acid, tartaric acid, succinic acid, malonic acid, citric acid or benzoic acid, quaternary ammonium salts such as benzyltrimethylammonium salts, choline salts, tetramethylammonium salts and tetraethylammonium salts, and metal acetylacetonates such as chromium acetylacetonate, titania acetylacetonate, aluminum acetylacetonate, cobalt acetylacetonate and nickel acetylacetonate. More specifically, sodium acetate, disodium malonate, choline acetate, choline hydrogen malonate and dicholine malonate are preferably used. When basic water dispersible colloidal silica is used as the colloidal silica and an aliphatic carboxylic acid is used as the acid for the hydrolysis of the alkoxysilanes, the organosiloxane resin coating composition already contains a curing catalyst.

The content of the curing catalyst changes according to the composition of the organosiloxane resin, the proceedings of the hydrolysis and condensation reactions and thermosetting conditions. The content of the curing catalyst is preferably 0.01 to 10 parts by weight, more preferably 0.1 to 5 parts by weight based on 100 parts by weight of the total of the components A, B and C. When the content of the curing catalyst is lower than 0.01 part by weight, a sufficiently high curing speed is hardly obtained and when the content is higher than 10 parts by weight, the storage stability of the organosiloxane resin coating composition may degrade and a precipitate may be produced.

Therefore, the resin coating composition of the present invention preferably contains the curing catalyst (component E) in an amount of 0.01 to 10 parts by weight based on 100 parts by weight of the total of the components A to C.

Further, the resin coating composition of the present invention may be mixed with a known leveling agent in order to improve coatability and the smoothness of the obtained coating film.

Examples of the leveling agent include the SH200-100cs, SH28PA, SH29PA, SH30PA, ST83PA, ST80PA, ST97PA, ST86PA and SH21PA silicone compounds of Dow Corning Toray Co., Ltd., the KP321, KP322, KP323, KP324, KP326, KP340 and KP341 silicone compounds of Shin-Etsu Chemical Co., Ltd., and the F-179, F-812A and F-815 fluorine-based surfactants of Dainippon Ink and Chemicals, Inc. These leveling agents may be used alone or in combination of two or more. The leveling agent is preferably used in an amount of 0.01 to 5 parts by weight based on 100 parts by weight of the resin composition.

<laminate>

The laminate of the present invention comprises a substrate, a first layer and a second layer which are formed in this order. The present invention includes a laminate further comprising a colored layer, wherein the substrate, the colored layer, the first layer and the second layer are formed in this order. The present invention also includes a laminate further comprising a colored layer, wherein the substrate, the first layer, the second layer and the colored layer are formed in this order.

(substrate)

Examples of the substrate include general-purpose plastics typified by polyethylene resin, polypropylene resin, polystyrene resin, polyacryl styrene resin, ABS resin, AS resin, AES resin, ASA resin, SMA resin and polyalkyl methacrylate resin. Engineering plastics typified by polyphenyl ether resin, polyacetal resin, polycarbonate resin, polyalkylene terephthalate resin, polyamide resin, cyclic polyolefin resin and polyarylate resin (amorphous polyarylate, liquid crystalline polyarylate) are also included. Thermoplastic polyimides typified by polyether ether ketone, polyether imide and polyamide imide are further included. Super engineering plastics such as polysulfone, polyether sulfone and polyphenylene sulfide are still further included.

The resin composition is preferably applied to a transparent plastic substrate from the viewpoint of the transparency of the resin composition which is the feature of the present invention. Examples of the transparent plastic substrate include polycarbonate resin, acrylic resin such as polymethyl methacrylate, polyester resins such as polyethylene terephthalate, polybutylene terephthalate and poly(ethylene-2,6-naphthalate), polystyrene, polypropylene, polyarylate and polyether sulfone. Polycarbonate resin and acrylic resin are preferred, and polycarbonate resin is particularly preferred because they are useful as substrates having excellent abrasion resistance.

The polycarbonate resin is obtained by reacting a dihydric phenol with a carbonate precursor by an interfacial polycondensation or melting process. Typical examples of the dihydric phenol include 2,2-bis(4-hydroxyphenyl)propane (commonly called "bisphenol A"), 2,2-bis(3-methyl-4-hydroxyphenyl)propane, 2,2-bis(3,5-dimethyl-4-hydroxyphenyl)propane, 1,1-bis(4-hydroxyphenyl)ethane, 1,1-bis(4-hydroxyphenyl)cyclohexane, 2,2-bis(4-hydroxyphenyl)butane, 2,2-bis(4-hydroxyphenyl)-3-methylbutane, 9,9-bis{(4-hydroxy-3-methyl)phenyl}fluorene, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, $\alpha,\alpha'$-bis(4-hydroxyphenyl)-m-diisopropylbezene, bis(4-hydroxyphenyl)sulfide and bis(4-hydroxyphenyl)sulfone. Out of these, bisphenol A is preferred. These dihydric phenols may be used alone or in combination of two or more.

As the carbonate precursor is used a carbonyl halide, carbonate ester or haloformate, as exemplified by phosgene, diphenyl carbonate and dihaloformate of a dihydric phenol.

To manufacture a polycarbonate resin by reacting the dihydric phenol with the carbonate precursor by the interfacial polycondensation or melting process, a catalyst, a terminal capping agent and an antistatic agent for the dihydric phenol may be used as required. The polycarbonate resin may be a branched polycarbonate resin obtained by copolymerizing a polyfunctional aromatic compound having a functionality of 3 or more, a polyester carbonate resin obtained by copolymerizing an aromatic or aliphatic bifunctional carboxylic acid, or a mixture of two or more obtained polycarbonate resins.

In the interfacial polycondensation process using phosgene, the reaction is carried out in the presence of an acid binder and an organic solvent. Examples of the acid binder include alkali metal hydroxides such as sodium hydroxide and potassium hydroxide, and amine compounds such as pyridine. Examples of the solvent include halogenated hydrocarbons such as methylene chloride and chlorobenzene. A catalyst such as a tertiary amine or quaternary ammonium salt may be used to promote the reaction. The reaction temperature is generally 0 to 40°C, and the reaction time is several minutes to 5 hours.

In the melting process using diphenyl carbonate, a dihydric phenol component and diphenyl carbonate in a predetermined ratio are stirred in an inert gas atmosphere under heating while the formed alcohol or phenol is distilled off. The reaction temperature differs according to the boiling point of the formed alcohol or phenol but generally 120 to 350°C. The reaction is completed while the formed alcohol or phenol is distilled off by reducing pressure from the initial stage. An ordinary transesterification catalyst may be used to promote the reaction.

The molecular weight of the polycarbonate resin is preferably $1.0 \times 10^4$ to $5.0 \times 10^4$, more preferably $1.5 \times 10^4$ to $3.5 \times 10^4$ in terms of viscosity average molecular weight (M). A polycarbonate resin having the above viscosity average molecular weight is preferred because it has sufficiently high strength and high melt flowability at the time of molding. The viscosity average molecular weight as used herein is obtained by inserting a specific viscosity ($\eta_{sp}$) obtained from a solution containing 0.7 g of the polycarbonate resin dissolved in 100 ml of methylene chloride at 20°C into the

following equation.

$$\eta_{sp}/c = [\eta] + 0.45 \times [\eta]^2 c$$

$$[\eta] = 1.23 \times 10^{-4} M^{0.83}$$

(c = 0.7, [η] is an intrinsic viscosity)

To manufacture the polycarbonate resin, a stabilizer such as phosphite, phosphate or phosphonate, a flame retardant such as tetrabromobisphenol A, a low-molecular weight polycarbonate of tetrabromobisphenol A or decabromodiphenol, a colorant and a lubricant may be added as required.

Design can be improved by applying the resin composition of the present invention to an opaque plastic substrate. For example, when a film of the resin composition of the present invention is formed on a plastic substrate which has been colored black, an impression that the plastic substrate is finished with black lacquer can be given. In this case, the plastic substrate does not always need to be transparent and the above resin is suitably selected and mixed with the above resin according to the use purpose of the laminate.

The plastic substrate may be further mixed with commonly used additives such as a heat stabilizer and a release agent. It may also be mixed with an infrared absorbent such as cyanine-based compound, squarylium-based compound, thiol nickel complex salt-based compound, phthalocyanine-based compound, triallylmethane-based compound, naphthoquinone-based compound, anthraquinone-based compound, carbon black, antimony oxide, indium oxide-doped tin oxide or lanthanum boride.

It may also be mixed with an organic ultraviolet absorbent such as a benzotriazole-based, benzophenone-based, triazine-based or salicylate-based ultraviolet absorbent, or an inorganic ultraviolet absorbent such as titanium oxide, cerium oxide or zinc oxide. It may further be mixed with an antioxidant, an optical stabilizer and a foaming agent.

It may still further be mixed with a reinforcing agent such as talc, mica, clay, wollastonite, calcium carbonate, glass fibers, glass beads, glass balloon, milled fibers, glass flakes, carbon fibers, carbon flakes, carbon beads, carbon milled fibers, metal flakes, metal fibers, metal coated glass fibers, metal coated carbon fibers, metal coated glass flakes, silica, ceramic particles, ceramic fibers, aramid particles, aramid fibers, polyarylate fibers, graphite, conductive carbon black or whiskers.

It may be mixed with a flame retardant such as halogen-based, phosphate-based, metal salt-based, red phosphorus, silicon-based, fluorine-based or metal hydrate-based flame retardant. It may also be mixed with a pigment or dye such as carbon black or titanium oxide. It may also be mixed with a light diffuser such as acryl crosslinked particles, silicon crosslinked particles, super thin glass flakes or calcium carbonate particles. It may further be mixed with a fluorescent brightener, light accumulating pigment, fluorescent dye, antistatic agent, flowability modifier, crystal nucleating agent, inorganic or organic antibacterial agent, photocatalyst-based antifouling agent (such as particulate titanium oxide or particulate zinc oxide), impact modifier typified by graft rubber and photochromic agent.

(first layer: primer layer)

The organosiloxane resin coating composition of the present invention can be directly applied to a substrate. However, to improve adhesion to the substrate, a first layer (primer layer) is preferably formed on the substrate.

For example, when a polycarbonate resin is used as the substrate, a thin film comprising an acrylic resin composition containing a (meth)acrylic resin showing high affinity for both of the polycarbonate resin and the organosiloxane resin composition and one or more vinyl-based resins as the main component is preferred as the first layer. This acrylic resin composition may be thermoplastic or thermosetting, as exemplified by a polymer obtained by radically polymerizing a monomer having a polymerizable unsaturated group such as methyl methacrylate in an organic solvent, and an emulsion polymerized emulsion.

The acrylic resin composition which is particularly preferably used as the first layer comprises (F) an acrylic copolymer containing at least 70 mol% of a recurring unit represented by the following formula (component F):

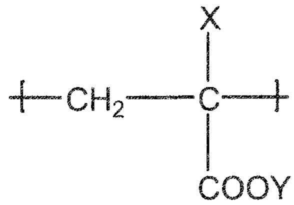

(wherein X is a hydrogen atom or methyl group, Y is a methyl group, ethyl group, cycloalkyl group, hydroxyalkyl group having 2 to 5 carbon atoms or triazine-based ultraviolet absorbent residue, the content of the hydrogen atom in X is not more than 30 mol%, the content of the cycloalkyl group in Y is 1 to 85 mol%, the content of the triazine-based ultraviolet absorbent residue is 0 to 15 mol%, and the content of the ethyl group is 1 to 98 mol%.); (G) 0.8 to 1. 5 equivalents of a blocked polyisocyanate compound having an isocyanate group ratio of 5.5 to 50 wt% based on 1 equivalent of the hydroxyl group of the acrylic copolymer of the formula (F) (component G); (H) 0.001 to 0.4 part by weight of a curing catalyst (component H) based on 100 parts by weight of the total of the components F and G; and (I) 0 to 40 parts by weight of a triazine-based ultraviolet absorbent (component I) based on 100 parts by weight of the total of the components F and G, wherein

the total content of the triazine-based ultraviolet absorbent residue contained in the component F and the component I is 1 to 40 wt%.

The acrylic resin composition may contain an optical stabilizer, a heat ray (near-infrared) absorbent, an ultraviolet absorbent and a silane coupling agent in order to improve the weatherability of the substrate.

As the method of forming the first layer, the above acrylic resin composition and additive components such as an optical stabilizer and an ultraviolet absorbent are dissolved in a volatile solvent which does not react with and dissolve the substrate, the resulting acrylic resin composition is applied to the surface of the substrate, and then the solvent is removed by heating.

A suitable coating technique may be suitably selected from among bar coating, dip coating, flow coating, spray coating, spin coating and roller coating according to the shape of the substrate to be coated. The substrate coated with the resin composition is generally heated at normal temperature to a temperature lower than the thermal deformation temperature of the substrate to dry and remove the solvent and further optionally heated at 40 to 140 °C after the removal of the solvent to crosslink a crosslinkable group so as to obtain a substrate having the above acrylic resin cured layer as the first layer.

The production processes and characteristic properties of the acrylic resin, the acrylic resin composition comprising the same and the acrylic resin cured layer are described in detail in JP-A 2008-231304 and WO2007/105741.

The thickness of the coating resin layer as the first layer should be a value that ensures that it attaches the substrate and the second layer completely and is large enough to hold required amounts of the above additives, that is, preferably 0.1 to 15 μm, more preferably 1 to 12 μm.

Adhesion to the second layer and the substrate is improved by forming the first layer composed of a coating resin comprising the above acrylic resin as the main component, thereby making it possible to obtain a laminate having excellent abrasion resistance and weatherability.

(second layer)

The second layer is formed by applying the organosiloxane resin coating composition of the present invention and thermosetting it. The second layer is formed on the first layer (primer layer). The contact angle of water on the surface of the second layer is preferably 85 °C or more, more preferably 86°C or more. By setting the contact angle of water on the surface of the second layer to this range, the decomposition of the organosiloxane resin layer by the photocatalytic activity of the metal oxide (component D) can be suppressed through the control of the penetration of water.

The coating technique for the organosiloxane resin coating composition is suitably selected from among dip coating, flow coating, spray coating, spin coating, roller coating and bar coating according to the shape of the substrate to be coated.

The thickness of a coating layer formed from the organosiloxane resin coating composition is generally 2 to 10 μm, preferably 3 to 8 μm. When the thickness of the coating layer falls within the above range, the coating layer is not cracked by stress generated at the time of thermosetting, or adhesion between the coating layer and the substrate does not degrade, thereby obtaining a coating layer having sufficiently high abrasion resistance, which is the object of the present invention.

The coating layer is thermoset after application to be firmly attached to the first layer. Thermosetting is preferably carried out at a high temperature as long as there is no problem with the heat resistance of the substrate because curing can be completed quickly. At normal temperature, thermosetting does not proceed and a cured film cannot be obtained.

This means that the organosiloxane component contained in the resin composition of the present invention partially condensates. In the course of thermosetting, the condensation reaction of the residual Si-OH occurs, thereby forming a Si-O-Si bond to produce a coating layer having excellent abrasion resistance. Thermosetting is generally carried out at 50 to 400°C for 10 minutes to 4 hours, preferably at 80 to 160°C for 20 minutes to 2 hours, most preferably at 110 to 135 °C for 15 to 90 minutes when the resin coating composition is applied to a polycarbonate substrate.

Although the coating layer contains the metal oxide, it is excellent in transparency, abrasion resistance, hardness, hot water resistance, organic solvent resistance, acid resistance and adhesion to the substrate and obtains extremely excellent weatherability and weathering stability due to the excellent ultraviolet absorptivity of an inorganic ultraviolet absorbent which is not deteriorated by ultraviolet light.

(colored layer)

The laminate of the present invention may have a colored layer. In this case, the layer configuration of the laminate is preferably substrate/colored layer/first layer/second layer, or substrate/first layer/second layer/colored layer.

As the resin component for forming the colored layer used in the present invention, as long as adhesion to a silicone-based hard coating layer is obtained, urethane-based resin, epoxy-based resin and silicone modified acrylic resin are suitable. To obtain high adhesion to a silicone-based hard coat, epoxy-based resin is preferred. Examples of the urethane-based resin ink include the MAB series and POS series of Teikoku Ink Seizo Co., Ltd., and examples of the epoxy resin-based ink include the PS series of Teikoku Printing Inks Mfg. Co. Ltd. Examples of the silicone modified acrylic resin-based ink include the Silicone Wide of Toupe Co., Ltd.

The method of forming the colored layer is not particularly limited in the present invention, and screen printing, gravure printing, offset printing, roller printing, spray coating and brush coating may be employed. Curing conditions are not particularly limited, and normal-temperature drying and heat drying may be employed. However, to accelerate the proceeding of a curing reaction, drying by heating at 80 to 120°C for 30 minutes to 1 hour is preferably carried out.

The thickness of the colored layer is preferably 5 to 100 μm, more preferably 10 to 80 μm. By forming this colored layer on all or part of the surface of the substrate or all or part of the surface of the second layer formed by thermosetting the organosiloxane resin composition, a laminate having abrasion resistance, weatherability and a good design can be obtained.

Examples

The following examples are provided for the purpose of further illustrating the present invention but are in no way to be taken as limiting. "Parts" and "%" in the following examples mean parts by weight and wt%, respectively.

(I. Synthesis of acrylic copolymer solutions (α) and (β)) Reference Example I-1

74.2 parts of EMA, 33.6 parts of CHMA, 13.0 parts of HEMA, 12.0 parts of LA-82 (hindered amine-based optically stable group-containing methacrylate of ADEKA CORPORATION; 1,2,2,6,6-pentamethyl-4-piperidyl methacrylate), 132.8 parts of MIBK and 66.4 parts of 2-BuOH were added to a flask equipped with a reflux condenser and a stirrer whose inside had been substituted by nitrogen to be mixed together. A nitrogen gas was let pass through the obtained mixture for 15 minutes to remove oxygen, the temperature was raised to 70°C in a nitrogen gas stream, and 0.33 part of AIBN was added to the mixture to carry out a reaction in a nitrogen gas stream under agitation at 70°C for 5 hours. 0.08 part of AIBN was further added, and the temperature was raised to 80°C to further carry out the reaction for 3 hours so as to obtain an acrylic copolymer solution (α) having a nonvolatile content of 39.7 %. The weight average molecular weight of the acrylic copolymer was 115,000 in terms of polystyrene when measured by GPS (column; Shodex GPCA-804, eluant; chloroform).

Reference Example I-2

59.4 parts of EMA, 50.5 parts of CHMA, 13.0 parts of HEMA, 12.0 parts of LA-82, 22.2 parts of MOI-T405 (Tinubin 405 of Ciba Specialty Chemicals Co., Ltd.; 2-[4-[(2-hydroxy-3-(2'-ethyl)hexyl)oxy]-2-hydroxyphenyl]-4,6-bis(2,4-dimethylphenyl)-1,3,5-triazine and Karens MOI of Showa Denko K.K.; adduct of 2-isocyanatoethyl methacrylate), 160.4 parts of MIBK and 80.2 parts of 2-BuOH were added to a flask equipped with a reflux condenser and a stirrer whose inside had been substituted by nitrogen to be mixed together. A nitrogen gas was let pass through the obtained mixture for 1.5 minutes to remove oxygen, the temperature was raised to 70°C in a nitrogen gas stream, and 0.34 part of AIBN was added to the mixture to carry out a reaction in a nitrogen gas stream under agitation at 70°C for 5 hours. 0.08 part of AIBN was further added, and the temperature was raised to 80°C to further carry out the reaction for 3 hours so as to obtain an acrylic copolymer solution (β) having a nonvolatile content of 39.5 %. The weight average molecular weight

of the acrylic copolymer was 85, 000 in terms of polystyrene when measured by GPS (column; Shodex GPCA-804, eluant; chloroform).

(II. Preparation of acrylic resin coating compositions (i-1) and (i-2))

Reference Example II-1

39.1 parts of MIBK, 19.5 parts of 2-BuOH and 79.3 parts of PMA were added to and mixed with 100 parts of the above acrylic copolymer solution (α), 5.3 parts of Tinubin 400 (triazine-based ultraviolet absorber of Ciba Specialty Chemicals Co., Ltd.) and 10.1 parts of VESTANAT B1358/100 were added to ensure that the amount of the isocyanate group became 1.0 equivalent based on 1 equivalent of the hydroxyl group of the acrylic copolymer contained in the acrylic copolymer solution (α), and 0.015 part of DMDNT, 9.46 parts of APZ-6633 (a solution of a hydrolyzed and condensed product of a silane coupling agent of Nippon Unicar Company Limited) and 2.75 parts of LA-82 (hindered-based optical stabilizer of ADEKA CORPORATION) were added and stirred at 25°C for 1 hour to obtain an acrylic resin coating composition (i-1).

Reference Example II-2

29.3 parts of MIBK, 22.1 parts of 2-BuOH and 84.0 parts of PMA were added to and mixed with 100 parts of the above acrylic copolymer solution (β), 9.5 parts of VESTANAT B1358/100 was added to ensure that the amount of the isocyanate group became 1.0 equivalent based on 1 equivalent of the hydroxyl group of the acrylic copolymer contained in the acrylic resin solution (β), and 9.3 parts of APZ-6633 and 0.025 part of DMDNT were added and stirred at 25°C for 1 hour to obtain an acrylic resin composition (i-2).

The above symbols denote the following components.
EMA; ethyl methacrylate
COMA; cyclohexyl methacrylate
HEMA; 2-hydroxyethyl methacrylate
LA-82; 1,2,2,6,6-pentamethyl-4-piperidyl methacrylate (Adecastab LA-82 of ADEKA CORPORATION; hindered amine-based optical stable group-containing methacrylate)
MIBK; methyl isobutyl ketone
2-BuOH; 2-butanol
AIBN; azobisisobutyronitrile
VESTANAT B1358/100; blocked polyisocyanate compound (VESTANAT B1358/100 of Degsa Japan Co., Ltd., the content of the formed isocyanate group is 12.4 wt%)
DMDNT; dimethyltin dineodecanoate
Tinubin 400; a mixture of about 85 % of a mixture of 2-[4-[(2-hydroxy-3-dodecyloxypropyl)oxy]-2-hydroxyphenyl ]-4,6-bis(2,4-dimethylphenyl)-1,3,5-triazine and 2-[4-[(2-hydroxy-3-tridecyloxypropyl)oxy]-2-hydroxyphenyl]-4,6-bis(2,4-dimethylphenyl)-1,3,5-triazine and 15 % of 1-methoxy-2-propanol (Tinubin 400 of Ciba Specialty Chemicals Co., Ltd.)
Tinubin 405; 2-[4-[(2-hydroxy-3-(2'-ethyl)hexyl)oxy]-2-hydroxyphenyl] -4,6-bis(2,4-dimethylphenyl)-1,3,5-triazine (Tinubin 405 of Ciba Specialty Chemicals Co., Ltd.)
Karenz MOI; 2-isocyanatoethyl methacrylate
APZ-6633; an ethanol solution containing 5 wt% of a hydrolyzed and condensed product of an amino group-containing silane coupling agent (APZ-6633 of Dow Corning Toray Co., Ltd.)
PMA; 1-methoxy-2-propanol

(III. Synthesis of organosiloxane resin compositions (A) to (H))

Reference Example III-1

0.1 part of concentrated hydrochloric acid (12M) was added to 100 parts of a water dispersible colloidal silica dispersion (Cataloid SN-30 of Catalysts & Chemicals Industries Co., Ltd., solids content of 30 wt%) and stirred well. This dispersion was cooled to 10°C, and a mixture of 155 parts of methyltrimethoxysilane and 6.4 parts of (3,3,3-trifluoropropyl) trimethoxysilane was added dropwise to the dispersion. The temperature of the reaction solution began to rise by reaction heat right after the addition of a mixture of the two different alkoxysilanes and reached 60°C about 5 minutes after the start of addition. After the temperature reached 60°C, the temperature of the reaction solution was gradually lowered by cooling with an iced water bath. When the temperature of the reaction solution became 35°C, the reaction solution was stirred for 5 hours while keeping this temperature, and 0.7 part of a 45 % choline methanol solution as a curing catalyst and 4.9 parts of acetic acid as a pH control agent were mixed with the reaction solution to obtain

an organosiloxane resin composition (A).

Reference Example III-2

0.1 part of concentrated hydrochloric acid (12M) was added to 100 parts of a water dispersible colloidal silica dispersion (Cataloid SN-30 of Catalysts & Chemicals Industries Co., Ltd., solids content of 30 wt%) and stirred well. This dispersion was cooled to 10°C, and a mixture of 100 parts of methyltrimethoxysilane and 3.7 parts of phenyltrimethoxysilane was added dropwise to the dispersion. The temperature of the reaction solution began to rise by reaction heat right after the addition of a mixture of the two different alkoxysilanes and reached 60°C about 5 minutes after the start of addition. After the temperature reached 60°C, the temperature of the reaction solution was gradually lowered by cooling with an iced water bath. When the temperature of the reaction solution became 35°C, the reaction solution was stirred for 5 hours while keeping this temperature, and 0.2 part of sodium acetate as a curing catalyst and 3. 9 parts of acetic acid as a pH control agent were mixed with the reaction solution to obtain an organosiloxane resin composition (B)

Reference Example III-3

0.1 part of concentrated hydrochloric acid (12M) was added to 100 parts of a water dispersible colloidal silica dispersion (Snowtex 30 of Nissan Chemical Industries, Ltd., solids content of 30 wt%) and stirred well. This dispersion was cooled to 10°C, and a mixture of 99 parts of methyltrimethoxysilane and 4.6 parts of dimethyldimethoxysilane was added dropwise to the dispersion. The temperature of the reaction solution began to rise by reaction heat right after the addition of a mixture of the two different alkoxysilanes and reached 60°C about 5 minutes after the start of addition. After the temperature reached 60°C, the temperature of the reaction solution was gradually lowered by cooling with an iced water bath. When the temperature of the reaction solution became 35°C, the reaction solution was stirred for 5 hours while keeping this temperature, and 0. 7 part of a 45 % choline methanol solution as a curing catalyst and 0.8 part of a 25 % malonic acid methanol solution as a pH control agent were mixed with the reaction solution to obtain an organosiloxane resin composition (C).

Reference Example III-4

7.9 parts of acetic acid was added to 100 parts of a water dispersible colloidal silica dispersion (Cataloid SN-30 of Catalysts & Chemicals Industries Co., Ltd. , solids content of 30 wt%) and stirred well. This dispersion was cooled to 10°C, and a mixture of 159 parts of methyltrimethoxysilane and 0.7 part of (heptadecafluoro-1,1,2,2-t-trahydrodecyl) trimethoxysilane (LS-4875 of Shin-Etsu Chemical Co., Ltd.) was added dropwise to the dispersion. The temperature of the reaction solution began to rise by reaction heat right after the addition of a mixture of the two different alkoxysilanes and reached 55°C about 5 minutes after the start of addition. After the temperature reached 55°C, the temperature of the reaction solution was gradually lowered by cooling with an iced water bath. When the temperature of the reaction solution became 35°C, 10.9 parts of titanium oxide slurry (PCTR-2020 of Sumitomo Osaka Cement Co., Ltd. , solids content of 20 wt%, solvent: 2-propanol) was added dropwise, the reaction mixture was stirred for 25 hours while keeping this temperature, and 0.9 part of a 45 % choline methanol solution as a curing catalyst and 0.9 parts of acetic acid as a pH control agent were mixed with the reaction solution to obtain an organosiloxane resin composition (D).

Reference Example III-5

0.1 part of concentrated hydrochloric acid (12M) was added to 100 parts of a water dispersible colloidal silica dispersion (Cataloid SN-30 of Catalysts & Chemicals Industries Co., Ltd., solids content of 30 wt%) and stirred well. This dispersion was cooled to 10°C, and a mixture of 151 parts of methyltrimethoxysilane and 11.6 parts of phenyltrimethoxysilane was added dropwise to the dispersion. The temperature of the reaction solution began to rise by reaction heat right after the addition of a mixture of the two different alkoxysilanes and reached 60°C about 5 minutes after the start of addition. After the temperature reached 60°C, the temperature of the reaction solution was gradually lowered by cooling with an iced water bath. When the temperature of the reaction solution became 35°C, the reaction solution was stirred for 5 hours while keeping this temperature, and 0.7 part of a 45 % choline methanol solution as a curing catalyst and 1.2 parts of acetic acid as a pH control agent were mixed with the reaction solution to obtain an organosiloxane resin composition (E).

Reference Example III-6

0.1 part of concentrated hydrochloric acid (12M) was added to 100 parts of a water dispersible colloidal silica dispersion (Cataloid SN-30 of Catalysts & Chemicals Industries Co., Ltd., solids content of 30 wt%) and stirred well.

This dispersion was cooled to 10°C, and a mixture of 92 parts of methyltrimethoxysilane and 14.9 parts of phenyltrimethoxysilane was added dropwise to the dispersion. The temperature of the reaction solution began to rise by reaction heat right after the addition of a mixture of the two different alkoxysilanes and reached 60°C about 5 minutes after the start of addition. After the temperature reached 60°C, the temperature of the reaction solution was gradually lowered by cooling with an iced water bath. When the temperature of the reaction solution became 35°C, the reaction solution was stirred for 5 hours while keeping this temperature, and 0.7 part of a 45 % choline methanol solution as a curing catalyst and 0.8 part of a 25 % malonic acid methanol solution as a pH control agent were mixed with the reaction solution to obtain an organosiloxane resin composition (F).

Reference Example III-7

An organosiloxane resin composition (G) was obtained in completely the same manner as in Reference Example III-1 except that a mixture of 135 parts of methytrimethoxysilane and 38.1 parts of (3,3,3-trifluoroporopyl)trimethoxysilane was added dropwise to 100 parts of a water dispersible colloidal silica dispersion (Cataloid SN-30 of Catalysts & Chemicals Industries Co., Ltd., solids content of 30 wt%) comprising 0.1 part of concentrated hydrochloric acid (12M).

Reference Example III-8

An organosiloxane resin composition (H) was obtained in completely the same manner as in Reference Example III-2 except that a mixture of 102 parts of methyltrimethoxysilane and 0.07 part of phenyltrimethoxysilane was added dropwise to 100 parts of a water dispersible colloidal silica dispersion (Cataloid SN-30 of Catalysts & Chemicals Industries Co., Ltd., solids content of 30 wt%) comprising 0.1 part of concentrated hydrochloric acid (12M).

(IV. Preparation of organosiloxane resin coating compositions (ii-1) to (ii-11)

Reference Example IV-1

Titanium oxide slurry (PCTR-2020 of Sumitomo Osaka Cement Co., Ltd., solids content of 20 wt%, solvent: 2-propanol) was dispersed by using a bead mill (Ultra-Apex Mill UAM-015 of Kotobuki Industries Co., Ltd.). This dispersion was carried out by letting the slurry pass through UAM-015 filled with $ZrO_2$ beads having a diameter of 0.05 mm once. Then, 174 parts of 2-propanol was added dropwise to 5.5 parts of the slurry under agitation to dilute it. 267 parts of the organosiloxane resin composition (A) was added dropwise to the diluted slurry under agitation, and 0.6 part of SH 28 PAINT ADDIVE (of Dow Corning Toray Co., Ltd.) was added in the end to obtain an organosiloxane resin coating composition (ii-1). The pH of the coating composition measured by using the D-22 pH meter of Horiba, Ltd. calibrated by using a pH 7 standard solution and a pH 4 standard solution was 5.5. Right after preparation, the average particle diameter of the coating composition measured by the dynamic light scattering method using the FPAR-1000 fiber-optics particle size analyzer of Otsuka Electronics Co., Ltd. was 63 nm, and the average particle diameter of the coating composition measured by putting it into an airtight container, immersing it into 40°C hot water and leaving it for 2 weeks was 72 nm. The composition of the organosiloxane resin coating composition (ii-1) is shown in Table 1. The physical properties of the coating composition are shown in Table 2.

Reference Example IV-2

39.3 parts of 2-propanol was added dropwise to 10.9 parts of cerium oxide slurry (Nanotec Slurry CEANB of CI Chemicals Co., Ltd., solids content of 15 wt%) under agitation to dilute it. 209 parts of the organosiloxane resin composition (B) was added dropwise to the diluted slurry under agitation, and then 72.8 parts of 1-butanol was added dropwise. Finally, 0.42 part of SH 28 PAINT ADDIVE (of Dow Corning Toray Co., Ltd.) was added to obtain an organosiloxane resin coating composition (ii-2). The pH of the coating composition measured by using the D-22 pH meter of Horiba, Ltd. calibrated by using a pH 7 standard solution and a pH 4 standard solution was 5.6. Right after preparation, the average particle diameter of the coating composition measured by the dynamic light scattering method was 36 nm, and the average particle diameter of the coating composition measured by putting it into an airtight container, immersing it into 40°C hot water and leaving it for 2 weeks was 48 nm. The composition of the organosiloxane resin coating composition (ii-2) is shown in Table 1. The physical properties of the coating composition are shown in Table 2.

Reference Example IV-3

20 parts of zinc oxide fine particles (FINEX-50W-LP2 of Sakai Chemical Industries Co. , Ltd., surface treated with a silica-based inorganic layer and an organosiloxane resin-based organic layer, primary particle diameter of 20 nm)

and 4.5 parts of the Disparon DA-550 solvent-free nonionic surfactant (of Kusumoto Chemicals Ltd.) were mixed with 380 parts of 2-propanol and dispersed by using a bead mill. This dispersion was carried out by circulating the slurry in a bead mill filled with $ZrO_2$ beads having a diameter of 0.05 mm eight times. The obtained zinc oxide slurry had a solids content of 5 wt% and an average particle diameter measured by the dynamic light scattering method of 125 nm. Then, 212.2 parts of 2-propanol was added dropwise to 172.9 parts of the slurry under agitation to dilute it. 205 parts of the organosiloxane resin composition (C) and 4.3 parts of 1,3,5-tris(3,3,3-trifluoropropyl)-1,3,5-trimethylcyciotr isiloxane were added dropwise to the diluted slurry sequentially under agitation, and 0.48 part of SH 28 PAINT ADDIVE (of Dow Corning Toray Co. , Ltd.) was added in the end to obtain an organosiloxane resin coating composition (ii-3). The pH of the coating composition measured by using the D-22 pH meter of Horiba, Ltd. calibrated by using a pH 7 standard solution and a pH 4 standard solution was 5.3. Right after preparation, the average particle diameter of the coating composition measured by the dynamic light scattering method was 131 nm, and the average particle diameter of the coating composition measured by putting it into an airtight container, immersing it into 40°C hot water and leaving it for 2 weeks was 143 nm. The composition of the organosiloxane resin coating composition (ii-3) is shown in Table 1. The physical properties of the coating composition are shown in Table 2.

Reference Example IV-4

An organosiloxane resin coating composition (ii-4) was obtained by adding 163.7 parts of 2-propanol dropwise to 279. 7 parts of the organosiloxane resin composition (D) under agitation and adding 0.55 part of SH 28 PAINT ADDIVE (of Dow Corning Toray Co. , Ltd.) in the end. The pH of the coating composition measured by using the D-22 pH meter of Horiba, Ltd. calibrated by using a pH 7 standard solution and a pH 4 standard solution was 5.5. Right after preparation, the average particle diameter of the coating composition measured by the dynamic light scattering method was 69 nm, and the average particle diameter of the coating composition measured by putting it into an airtight container, immersing it into 40°C hot water and leaving it for 2 weeks was 78 nm. The composition of the organosiloxane resin coating composition (ii-4) is shown in Table 1. The physical properties of the coating composition are shown in Table 2.

Reference Example IV-5

181.8 parts of 2-propanol was added dropwise to 5.59 parts of titanium oxide slurry (PCTR-2020 of Sumitomo Osaka Cement Co., Ltd., solids content of 20 wt%, solvent: 2-propanol) under agitation to dilute it. 264.4 parts of the organosiloxane resin composition (E) was added dropwise to the diluted slurry under agitation, and 0.56 part of SH 28 PAINT ADDIVE (of Dow Corning Toray Co., Ltd.) was added in the end to obtain an organosiloxane resin coating composition (ii-5). The pH of the coating composition measured by using the D-22 pH meter of Horiba, Ltd. calibrated by using a pH 7 standard solution and a pH 4 standard solution was 6.1. Right after preparation, the average particle diameter of the coating composition measured by the dynamic light scattering method was 65 nm, and the average particle diameter of the coating composition measured by putting it into an airtight container, immersing it into 40°C hot water and leaving it for 2 weeks was 94 nm. The composition of the organosiloxane resin coating composition (ii-5) is shown in Table 1. The physical properties of the coating composition are shown in Table 2.

Reference Example IV-6

100.0 parts of 2-propanol was added dropwise to 56.6 parts of cerium oxide slurry (Nanotec Slurry CEANB of CI Chemicals Co., Ltd., solids content of 15 wt%) under agitation to dilute it. 205.1 parts of the organosiloxane resin composition (F) was added dropwise to the diluted slurry under agitation, and 222.1 parts of 1-butanol was added dropwise. Finally, 0.73 part of SH 28 PAINT ADDIVE (of Dow Corning Toray Co., Ltd.) was added to obtain an organosiloxane resin coating composition (ii-6). The pH of the coating composition measured by using the D-22 pH meter of Horiba, Ltd. calibrated by using a pH 7 standard solution and a pH 4 standard solution was 5.2. Right after preparation, the average particle diameter of the coating composition measured by the dynamic light scattering method was 41 nm, and the average particle diameter of the coating composition measured by putting it into an airtight container, immersing it into 40°C hot water and leaving it for 2 weeks was 67 nm. The composition of the organosiloxane resin coating composition (ii-6) is shown in Table 1. The physical properties of the coating composition are shown in Table 2.

Reference Example IV-7

20 parts of rutile type titanium oxide powders (JR-405 of Tayca Corporation, surface treated with alumina, primary particle diameter of 210 nm) and 4.5 parts of the Disparon DA-550 solvent-free nonionic surfactant (of Kusumoto Chemicals Co., Ltd.) were mixed with 380 parts of 2-propanol and dispersed by using a bead mill. This dispersion was carried out by circulating the slurry in the bead mill filled with $ZrO_2$ beads having a diameter of 0.05 mm ten times. The

obtained titanium oxide slurry had a solids content of 5 wt% and an average particle diameter measured by the dynamic light scattering method of 289 nm. 158 parts of 2-propanol was added dropwise to 22.3 parts of the slurry under agitation to dilute it. 267 parts of the organosiloxane resin composition (A) was added dropwise to the diluted slurry under agitation, and 0.56 parts of SH 28 PAINT ADDIVE (of Dow Corning Toray Co. , Ltd.) was added in the end to obtain an organosiloxane resin coating composition (ii-7). The pH of the coating composition measured by using the D-22 pH meter of Horiba, Ltd. calibrated by using a pH 7 standard solution and a pH 4 standard solution was 5.6. Right after preparation, the average particle diameter of the coating composition measured by the dynamic light scattering method was 288 nm, the average particle diameter of the coating composition measured by putting it into an airtight container, immersing it into 40°C hot water and leaving it for 2 weeks was 425 nm, and a trace amount of a precipitate was observed. The composition of the organosiloxane resin coating composition (ii-7) is shown in Table 1. The physical properties of the coating composition are shown in Table 2.

Reference Example IV-8

210.2 parts of 2-propanol was added dropwise to 6.13 parts of titanium oxide slurry (PCTR-2020 of Sumitomo Osaka Cement Co., Ltd., solids content of 20 wt%, solvent: 2-propanol) which had been treated by means of a bead mill in the same manner as in Reference Example IV-1 under agitation to dilute it. 278.7 parts of the organosiloxane resin composition (G) was added dropwise to the diluted slurry under agitation, and 0.62 part of SH 28 PAINT ADDIVE (of Dow Corning Toray Co., Ltd.) was added in the end to obtain an organosiloxane resin coating composition (ii-8). The pH of the coating composition measured by using the D-22 pH meter of Horiba, Ltd. calibrated by using a pH 7 standard solution and a pH 4 standard solution was 5.4. Right after preparation, the average particle diameter of the coating composition measured by the dynamic light scattering method was 62 nm, and the average particle diameter of the coating composition measured by putting it into an airtight container, immersing it into 40°C hot water and leaving it for 2 weeks was 77 nm. The composition of the organosiloxane resin coating composition (ii-8) is shown in Table 1. The physical properties of the coating composition are shown in Table 2.

Reference Example IV-9

38.1 parts of 2-propanol was added dropwise to 10.7 parts of cerium oxide slurry (Nanotec Slurry CEAB of CI Chemicals Co., Ltd., solids content of 15 wt%) under agitation to dilute it. 208.1 parts of the organosiloxane resin composition (H) was added dropwise to the diluted slurry under agitation, and 70.8 parts of 1-butanol was subsequently added dropwise. Finally, 0.41 part of SH 28 PAINT ADDIVE (of Dow Corning Toray Co., Ltd.) was added to obtain an organosiloxane resin coating composition (ii-9). The pH of the coating composition measured by using the D-22 pH meter of Horiba, Ltd. calibrated by using a pH 7 standard solution and a pH 4 standard solution was 5.6. Right after preparation, the average particle diameter of the coating composition measured by the dynamic light scattering method was 33 nm, and the average particle diameter of the coating composition measured by putting it into an airtight container, immersing it into 40°C hot water and leaving it for 2 weeks was 45 nm. The composition of the organosiloxane resin coating composition (ii-9) is shown in Table 1. The physical properties of the coating composition are shown in Table 2.

Reference Example IV-10

153.4 parts of 2-propanol was added dropwise to 110.6 parts of titanium oxide slurry (PCTR-2020 of Sumitomo Osaka Cement Co., Ltd., solids content of 20 wt%, solvent: 2-propanol) which had been treated by means of a bead mill in the same manner as in Reference Example IV-1 under agitation to dilute it. 266.8 parts of the organosiloxane resin composition (A) was added dropwise to the diluted slurry under agitation, and 0.66 part of SH 28 PAINT ADDIVE (of Dow Corning Toray Co. , Ltd.) was added in the end to obtain an organosiloxane resin coating composition (ii-10). The pH of the coating composition measured by using the D-22 pH meter of Horiba, Ltd. calibrated by using a pH 7 standard solution and a pH 4 standard solution was 5.9. Right after preparation, the average particle diameter of the coating composition measured by the dynamic light scattering method was 121 nm, and the average particle diameter of the coating composition measured by putting it into an airtight container, immersing it into 40 °C hot water and leaving it for 2 weeks was 139 nm. The composition of the organosiloxane resin coating composition (ii-10) is shown in Table 1. The physical properties of the coating composition are shown in Table 2.

Reference Example IV-11

An organosiloxane resin coating composition (ii-11) was obtained by adding 209.2 parts of the organosiloxane resin composition (B) dropwise to a mixture of 46.6 parts of 2-propanol and 69.9 parts of 1-butanol under agitation and finally adding 0.41 part of SH 28 PAINT ADDIVE (of Dow Corning Toray Co. , Ltd.). The pH of the coating composition

measured by using the D-22 pH meter of Horiba, Ltd. calibrated by using a pH 7 standard solution and a pH 4 standard solution was 5.5. The composition of the organosiloxane resin coating composition (ii-11) is shown in Table 1. The physical properties of the coating composition are shown in Table 2.

Table 1

| Organo-siloxane resin coating composition No. | Organo-siloxane resin composition No. | Colloidal silica (component A) | | | Alkoxysilane 1 (component B) | | |
|---|---|---|---|---|---|---|---|
| | | Type | Amount (parts) | In terms of $SiO_2$ (wt%) | Type | Amount (parts) | In terms of $R^1{}_mR^2{}_nSiO_{(4-m-n)/2}$ (wt%) |
| (ii-1) | A | SN30 | 100 | 27 | MTMOS | 155 | 69 |
| (ii-2) | B | SN30 | 100 | 37 | MTMOS | 100 | 60 |
| (ii-3) | C | NST | 100 | 35 | MTMOS | 99 | 56 |
| (ii-4) | D | SN30 | 100 | 28 | MTMOS | 159 | 72 |
| (ii-5) | E | SN30 | 100 | 27 | MTMOS | 151 | 66 |
| (ii-6) | F | SN30 | 100 | 35 | MTMOS | 92 | 53 |
| (ii-7) | A | SN30 | 100 | 27 | MTMOS | 155 | 69 |
| (ii-8) | G | SN30 | 100 | 24 | MTMOS | 135 | 54 |
| (ii-9) | H | SN30 | 100 | 37 | MTMOS | 102 | 63 |
| (ii-10) | A | SN30 | 100 | 27 | MTMOS | 155 | 69 |
| (ii-11) | B | SN30 | 100 | 37 | MTMOS | 100 | 60 |

Table 1 (continued)

| Organo-siloxane resin coating composition No. | Alkoxysilane 2 (component B) | | |
|---|---|---|---|
| | Type | Amount (parts) | In terms of $R^1{}_mR^2{}_nSiO_{(4-m-n)/2}$ (wt%) |
| (ii-1) | | | |
| (ii-2) | | | |
| (ii-3) | DMDMOS | 4.6 | 4 |
| (ii-4) | | | |
| (ii-5) | | | |
| (ii-6) | | | |
| (ii-7) | | | |
| (ii-8) | | | |
| (ii-9) | | | |
| (ii-10) | | | |
| (ii-11) | | | |

Table 1 (continued)

| Organo-siloxane Resin coating composition No. | Organo-siloxane resin composition No. | Compound having high hydrophobic nature (component C) | | | | Metal oxide (component D) | |
|---|---|---|---|---|---|---|---|
| | | Type | Amount (parts) | In terms of $R^4{}_jR^5{}_kSiO_{(4-j-k)/2}$ (wt%) | Addition-type amount (wt%) | Type | In terms of metal oxide (wt%) (based on 100 parts by weight of the total of components A, B and C) |
| (ii-1) | A | TFPTMS | 6.4 | 3.9 | | $TiO_2$-1 | 1 |
| (ii-2) | B | PTMS | 3.7 | 3.0 | | $CeO_2$ | 2 |
| (ii-3) | C | LS-8220 | 4.3 | | 5.0 | ZnO-1 | 10 |
| (ii-4) | D | HFDTMS | 0.7 | 0.5 | | $TiO_2$-1 | 2 |
| (ii-5) | E | PTMS | 11.6 | 6.7 | | $TiO_2$-1 | 1 |
| (ii-6) | F | PTMS | 14.9 | 11.4 | | $CeO_2$ | 10 |
| (ii-7) | A | TFPTMS | 6.4 | 3.9 | | $TiO_2$-2 | 1 |
| (ii-8) | G | TFPTMS | 38.1 | 21.3 | | $TiO_2$-1 | 1 |
| (ii-9) | H | PTMS | 0.07 | 0.06 | | $CeO_2$ | 2 |
| (ii-10) | A | TFPTMS | 6.4 | 3.9 | | $TiO_2$-1 | 20 |
| (ii-11) | B | PTMS | 3.7 | 3.0 | | | |

Table 1 (continued)

| Organo-siloxane resin coating composition No. | Curing catalyst (component E) | | pH control agent | |
|---|---|---|---|---|
| | Type | Amount (parts) | Type | Amount (parts) |
| (ii-1) | Choline | 0.7 | Acetic acid | 4.9 |
| (ii-2) | Acetic acid Na | 0.2 | Acetic acid | 3.9 |
| (ii-3) | Choline | 0.7 | Malonic acid | 0.2 |
| (ii-4) | Choline | 0.9 | Acetic acid | 0.9 |
| (ii-5) | Choline | 0.7 | Acetic acid | 1.2 |
| (ii-6) | Choline | 0.7 | Malonic acid | 0.2 |
| (ii-7) | Choline | 0.7 | Acetic acid | 4.9 |
| (ii-8) | Choline | 0.7 | Acetic acid | 4.9 |
| (ii-9) | Acetic acid Na | 0.2 | Acetic acid | 3.9 |
| (ii-10) | Choline | 0.7 | Acetic acid | 4.9 |
| (ii-11) | Acetic acid Na | 0.2 | Acetic acid | 3.9 |

In Table 1, the symbols denote the following substances.

SN30; water dispersible colloidal silica dispersion (Cataloid SN-30 of Catalysts & Chemicals Industries Co. , Ltd., solids content of 30 wt%)

NST; water dispersible colloidal silica dispersion (Snowtex 30 of Nissan Chemical Industries, Ltd., solids content of 30 wt%)

MEMOS; methyltrimethoxysilane

DMDMOS; dimethyldimethoxysilane

TFPTMS; (3,3,3-trifluoropropyl)trimethoxysilane

PTMS; phenyltrimethoxysilane

HFDTMS; (heptadecafluoro-1,1,2,2-tetrahydrodecyl) trimethoxysilane

LS-8220; 1,3,5-tris(3,3,3-trifluoropropyl)-1,3,5-trimethylcyclotrisiloxane (LS-8220 of Shin-Etsu Chemical Co., Ltd.)

$TiO_2$-1; titanium oxide slurry (PCTR-2020 of Sumitomo Osaka Cement Co., Ltd., solids content of 20 wt%, solvent: 2-propanol)

$TiO_2$-2: rutile type titanium oxide powders (JR-405 of Tayca Corporation, surface treated with alumina, primary particle

diameter of 210 nm)
$CeO_2$; cerium oxide slurry (Nanotec Slurry CEANB of CI Chemicals Co., Ltd., solids content of 15 wt%)
ZnO-1; zinc oxide fine particles (FINEX-50W-LP2 of Sakai Chemical Industry, Co., Ltd., surface treated with a silica-based inorganic layer and an organosiloxane resin-based organic layer, primary particle diameter of 20 nm)
Choline; 45 % choline methanol solution
Na acetate; sodium acetate

Table 2

| Organosiloxane resin coating composition No. | Solids content (wt%) | pH | average particle diameter: initial stage (nm) | average particle diameter: promoted at 40°C (2 weeks) (nm) |
|---|---|---|---|---|
| (ii-1) | 25 | 5.5 | 63 | 72 |
| (ii-2) | 25 | 5.6 | 36 | 48 |
| (ii-3) | 16 | 5.3 | 131 | 143 |
| (ii-4) | 25 | 5.5 | 69 | 78 |
| (ii-5) | 25 | 6 .1 | 65 | 94 |
| (ii-6) | 16 | 5.2 | 41 | 67 |
| (ii-7) | 25 | 5.6 | 288 | 425 |
| (ii-8) | 25 | 5.4 | 62 | 77 |
| (ii-9) | 25 | 5.6 | 33 | 45 |
| (ii-10) | 25 | 5.9 | 121 | 146 |
| (ii-11) | 25 | 5.5 | | |

(formation and evaluation of laminate)

The laminate was evaluated by the following methods. Evaluation of appearance:

The appearance (foreign matter, existence of whitening) and the existence of a crack of each of the coating layers on both sides of a test piece were checked visually. Haze:
A 50 mm square was cut out from a both-side coated test piece to evaluate its haze by means of the NDH 2000 turbidimeter of Nippon Denshoku Industries Co., Ltd. (JIS K7136).

(haze = Td/Tt x 100, Td: scattered light transmittance, Tt: total light transmittance)

Abrasion resistance:

A Taber abrasion test was made on one of the coating layers on both sides at 500 rpm under a load of 500 g by using the CS-10F abrasion wheel of Calibrase Co. Ltd. in accordance with ASTM D 1044-05 to measure the difference ΔH between the haze before the Taber abrasion test and the haze after the Taber abrasion test. The abrasion wheel was refaced at 25 rpm by using the ST-11 abrasive paper.

(haze = Td/Tt x 100, Td: scattered light transmittance, Tt: total light transmittance)

Contact angle:

This was measured by using the contact angle measuring instrument of Kyowa Interface Science Co., Ltd.

Adhesion:

100 crosscuts of $1mm^2$ were provided on the laminating layer of a both-side coated film and an adhesive tape manufactured by Nichiban Co. , Ltd. (tradename : "Cellotape" (registered trademark)) was adhered and pressed by a rubber roller (3 reciprocating runs at 19N) then the Cellotape was quickly peeled in the direction of 90 degrees and the number of laminating layer cuts left on the substrate were counted.

Hot water resistance:

Changes in the appearance and adhesion of the coating layers after the test piece was immersed in boiled water for 3 hours or 8 hours were evaluated.

Durability against high-temperature environment:

The test piece was left in a 100°C environment for 1,000 hours and taken out to evaluate its appearance and adhesion. Environmental cycle test:

The test piece was left in a 80°C-80 %RH environment for 4 hours, in a 25°C-50 %RH environment for 1 hour, in a -15°C environment for 4 hours and in a 25°C-50 %RH environment for 1 hour. After this cycle was repeated 30 times, the test piece was taken out to evaluate its appearance and adhesion. Weatherability:

An exposure test was made on the test piece by using the SX-75 super xenon weather meter of Suga Test Instruments Co., Ltd. at an UV irradiation intensity of 180 $W/m^2$ and a black panel temperature of 63°C without changing its ultraviolet light exposed surface for a total of 3,000 hours during which rain was caused to fall for 18 minutes every 120 minutes. After the test, the test piece was taken out, its surface was lightly rubbed with a sponge impregnated with a neutral detergent to be cleaned, and then its appearance and adhesion after the test and changes in yellowness index ($\Delta$YI) and haze ($\Delta$H) before and after the test were evaluated. During the exposure test, the test piece was taken out every 500 hours and its surface was lightly rubbed with a sponge impregnated with a neutral detergent to be cleaned. The yellowness index (YI) was measured with the SE-2000 spectral color meter of Nippon Denshoku Industries Co., Ltd.

Example 1

The acrylic resin coating composition (i-1) obtained in Reference Example II-1 was applied to both sides of a 5 mm-thick polycarbonate resin (to be preferred to as "PC resin" hereinafter) sheet by dip coating to ensure that the thickness of its coating film became 8.0 $\mu$m after thermosetting, left at 25°C for 20 minutes and then thermoset at 130°C for 1 hour. Then, the organosiloxane resin coating composition (ii-1) obtained in Reference Example IV-1 was applied to the coated surfaces of the sheet by dip coating to ensure that the thickness of its coating film became 4.0 $\mu$m after thermosetting, left at 25°C for 20 minutes and thermoset at 120°C for 1 hour to obtain a PC resin laminate. The evaluation results of the obtained PC resin laminate are shown in Table 3.

Example 2

A PC resin laminate was manufactured in the same manner as in Example 1 except that the acrylic resin coating composition and the organosiloxane resin coating composition shown in Table 3 were applied to a 5 mm-thick PC resin sheet. The evaluation results of the obtained PC resin laminate are shown in Table 3.

Example 3

The acrylic resin coating composition (i-1) obtained in Reference Example II-1 was applied to both sides of a PC resin sheet having a width of 100 mm, a length of 300 mm and a thickness of 5 mm by flow coating to ensure that the average thickness of its coating film became 8.0 $\mu$m after thermosetting, left at 25°C for 20 minutes and then thermoset at 130°C for 1 hour. Then, the organosiloxane resin coating composition (ii-3) obtained in Reference Example IV-3 was applied to the coated surfaces of the sheet by flow coating to ensure that the average thickness of its coating film became 4.0 $\mu$m after thermosetting, left at 25°C for 20 minutes and thermoset at 120°C for 1 hour to obtain a PC resin laminate. The evaluation results of the average thickness portion of the obtained PC resin laminate are shown in Table 3.

Examples 4 and 5

PC resin laminates were manufactured in the same manner as in Example 1 except that the acrylic resin coating composition and the organosiloxane resin coating composition shown in Table 3 were applied to a 5 mm-thick PC resin sheet. The evaluation results of the obtained PC resin laminates are shown in Table 3.

Example 6

A PC resin laminate was manufactured in the same manner as in Example 3 except that the acrylic resin coating composition and the organosiloxane resin coating composition shown in Table 3 were applied to a PC resin sheet having a width of 100 mm, a length of 300 mm and a thickness of 5 mm. The evaluation results of the average thickness portion of the obtained PC resin laminate are shown in Table 3.

Example 7

A PC resin laminate was manufactured in the same manner as in Example 1 except that the acrylic resin coating composition and the organosiloxane resin coating composition shown in Table 3 were applied to a 5 mm-thick PC resin sheet. The evaluation results of the obtained PC resin laminate are shown in Table 3.

Example 8

A 4 mm-thick injection molded product shaped like a rear triangular window for cars was formed from PC resin. A pattern shown in Fig. 1 was screen printed on the surface of the injected molded product by using a 250-mesh screen and dried at 80°C for 30 minutes to obtain a PC resin laminate having a 20 μm-thick colored layer. The printing ink was prepared by diluting 100 parts of the POS911 Indian ink containing urethane-based resin (of Teikoku Printing Inks Mfg. Co. Ltd.) with 15 parts of the P-003 solvent (of Teikoku Printing Inks Mfg. Co. Ltd.) and mixing the diluted ink with 6 parts of the 210 curing agent (of Teikoku Printing Inks Mfg. Co. Ltd.). The acrylic resin coating composition (i-1) obtained in Reference Example II-1 was applied to the PC resin laminate by dip coating to ensure that the thickness of its coating film became 8.0 μm after thermosetting, left at 25°C for 20 minutes and thermoset at 130°C for 1 hour. Then, the organosiloxane resin coating composition obtained in Reference Example IV-1 was applied to the surface of the acrylic resin thermoset film of the PC resin laminate by dip coating to ensure that the thickness of its coating film became 4 μm after thermosetting, left at 25°C for 20 minutes and thermoset at 120 °C for 1 hour to obtain a laminate. The evaluation results of the obtained laminate are shown in Table 3.

Example 9

A 4 mm-thick injection press molded product shaped like a rear triangular window for cars was formed from PC resin. The acrylic resin coating composition (i-2) obtained in Reference Example II-2 was applied to the injection press molded product by dip coating to ensure that the thickness of its coating film became 8.0 μm after thermosetting, left at 25°C for 20 minutes and thermoset at 130°C for 1 hour. Then, the organosiloxane resin coating composition (ii-2) obtained in Reference Example IV-2 was applied to the surface of the acrylic resin thermoset film of the PC resin laminate by dip coating to ensure that the thickness of its coating film became 4 μm after thermosetting, left at 25°C for 20 minutes and thermoset at 120°C for 1 hour. A colored layer was further formed on the organosiloxane resin thermoset films of the PC resin laminate. The evaluation results of the obtained laminate are shown in Table 3. The organosiloxane resin coating composition (ii-3) obtained in Reference Example IV-3 and used as organosiloxane resin coating composition in Example 3 does not fall under the scope of the claim since the organosiloxane resin composition (C) of Reference Example III-3 lacks component (C) as defined in the claim.

Comparative Examples 1 to 4

PC resin laminates were manufactured in the same manner as in Example 1 except that the acrylic resin coating compositions and the organosiloxane resin coating compositions shown in Table 3 were applied to a 5 mum-thick PC resin sheet. The evaluation results of the obtained laminates are shown in Table 3.

In Comparative Example 1, since the content of the component C in the organosiloxane resin composition was too high, the obtained laminate was inferior in adhesion.

In Comparative Example 2, since the content of the component C in the organosiloxane resin composition was too low and water was apt to penetrate the laminate, the organosiloxane resin coating film (second layer) was decomposed by the influence of a hydroxide radical formed from water by the photocatalytic function of the metal oxide, whereby the

laminate was easily cracked and therefore inferior in weatherability.

In Comparative Example 3, since the content of the component D in the organosiloxane resin composition was too high, the organosiloxane resin coating film (second layer) was slightly whitened, which is not preferred from the viewpoint of appearance.

In Comparative Example 4, the component D was not contained in the organosiloxane resin composition and the obtained laminate was inferior in weatherability.

65

Table 3

| | First layer | | Second layer | | Colored layer | Appearance | Haze (%) | Abrasion resistance ⊿H(%) | Contact angle (°) | Adhesion |
|---|---|---|---|---|---|---|---|---|---|---|
| | Coating composition No. | Thickness (µm) | Coating composition No. | Thickness (µm) | | | | | | |
| Ex.1 | i-1 | 8 | (ii-1) | 4 | — | good | 0.3 | 4 | 88 | 100 |
| Ex.2 | i-2 | 7 | (ii-2) | 4 | — | good | 0.2 | 4 | 87 | 100 |
| Ex.3 | i-1 | 8 | (ii-3) | 4 | — | good | 0.3 | 7 | 92 | 100 |
| Ex.4 | i-2 | 8 | (ii-4) | 5 | — | good | 0.3 | 5 | 100 | 100 |
| Ex.5 | i-1 | 8 | (ii-5) | 5 | — | good | 0.4 | 4 | 89 | 100 |
| Ex.6 | i-1 | 7 | (ii-6) | 5 | — | good | 0.3 | 6 | 91 | 100 |
| Ex.7 | i-1 | 8 | (ii-7) | 5 | — | good | 1.0 | 7 | 88 | 100 |
| Ex.8 | i-1 | 8 | (ii-1) | 4 | On the substrate | good | - | - | 88 | 100 |
| Ex.9 | i-2 | 7 | (ii-2) | 4 | On the second layer | good | - | - | - | 100 |
| C.Ex. 1 | i-1 | 8 | (ii-8) | 4 | — | good | 0.3 | 18 | 105 | 90 |
| C.Ex. 2 | i-2 | 7 | (ii-9) | 4 | — | good | 0.2 | 2 | 84 | 100 |
| C.Ex. 3 | i-2 | 8 | (ii-10) | 4 | — | whitened | 2.1 | 22 | - | 100 |
| C.Ex. 4 | i-1 | 7 | (ii-11) | 5 | — | good | 0.1 | 4 | 87 | 100 |

Ex.: Example C.Ex.: Comparative Example

Table 3 (continued)

| | Hot water resistance | | | | Durability against high-temperature environment | | Environment-resistant cycle test | |
|---|---|---|---|---|---|---|---|---|
| | 3 hours | | 8 hours | | | | | |
| | Appearance | Adhesion | Appearance | Adhesion | Appearance | Adhesion | Appearance | Adhesion |
| Ex.1 | Satisfactory | 100 | Satisfactory | 100 | Satisfactory | 100 | Satisfactory | 100 |
| Ex.2 | Satisfactory | 100 | Satisfactory | 100 | Satisfactory | 100 | Satisfactory | 100 |
| Ex.3 | Satisfactory | 100 | Satisfactory | 100 | Satisfactory | 100 | Satisfactory | 100 |
| Ex.4 | Satisfactory | 100 | Satisfactory | 100 | Satisfactory | 100 | Satisfactory | 100 |
| Ex.5 | Satisfactory | 100 | Satisfactory | 100 | Satisfactory | 100 | Satisfactory | 100 |
| Ex.6 | Satisfactory | 100 | Satisfactory | 100 | Satisfactory | 100 | Satisfactory | 100 |
| Ex.7 | Satisfactory | 100 | Satisfactory | 100 | Satisfactory | 100 | Satisfactory | 100 |
| Ex.8 | Satisfactory | 100 | Satisfactory | 100 | Satisfactory | 100 | Satisfactory | 100 |
| Ex.9 | Satisfactory | 100 | Satisfactory | 100 | Satisfactory | 100 | Satisfactory | 100 |
| C.Ex.1 | Satisfactory | 50 | — | — | Satisfactory | 75 | Cracked | 50 |
| C.Ex.2 | Satisfactory | 100 | Satisfactory | 100 | Satisfactory | 100 | Satisfactory | 100 |
| C.Ex.3 | — | — | — | — | — | — | — | — |
| C.Ex.4 | Satisfactory | 100 | Satisfactory | 100 | Satisfactory | 100 | Satisfactory | 100 |

ExEx. Example C.Ex.: Comparative Example

Table 3 (continued)

| | Weatherability | | | |
|---|---|---|---|---|
| | Appearance | Adhesion | ΔYI | ΔH(%) |
| Ex.1 | Satisfactory | 100 | 0.9 | 0.6 |
| Ex.2 | Satisfactory | 100 | 0.8 | 0.5 |
| Ex.3 | Satisfactory | 100 | 1.1 | 1.0 |
| Ex.4 | Satisfactory | 100 | 0.8 | 0.5 |
| Ex.5 | Satisfactory | 100 | 0.8 | 0.6 |
| Ex.6 | Satisfactory | 100 | 0.6 | 0.4 |
| Ex.7 | Satisfactory | 100 | 0.5 | 0.4 |
| Ex.8 | Satisfactory | 100 | — | — |
| Ex.9 | Satisfactory | 100 | — | — |
| C.Ex.1 | Peeled off | 0 | — | — |
| C.Ex.2 | Cracked | 100 | 1.2 | 1.7 |
| C.Ex.3 | — | — | — | — |
| C.Ex.4 | Peeled off | 0 | — | — |

ExEx. Example C.Ex.: Comparative Example

Effect of the Invention

A coating layer formed from the organosiloxane resin composition of the present invention is excellent in appearance, transparency, abrasion resistance, hardness, hot water resistance, adhesion, organic solvent resistance and acid resistance. The coating layer can prevent the abrasion of the surface of a substrate at a high level and exhibits excellent weatherability.

Industrial Feasibility

A molded product comprising a coating layer formed from the organosiloxane resin composition of the present invention is useful as a car window or a sunroof.

**Claims**

**1.** An organosiloxane resin composition comprising:

(A) colloidal silica (component A);
(B) a hydrolyzed and condensed product of an alkoxysilane represented by the following formula (B) (component B):

$$R^1_mR^2_nSi(OR^3)_{4-m-n} \qquad (B)$$

(wherein $R^1$, $R^2$ and $R^3$ are each independently an alkyl group having 1 to 4 carbon atoms, m and n are each

independently an integer of 0, 1 or 2, and (m+n) is an integer of 0, 1 or 2.)
(C) a hydrolyzed and condensed product of an alkoxysilane represented by the following formula (C) (component C):

$$R^4{}_jR^5{}_kSi(OR^6)_{4-j-k} \qquad (C)$$

(wherein $R^4$ is an aryl group having 6 to 12 carbon atoms or alkyl group having 1 to 20 carbon atoms which is substituted by a fluorine atom, $R^5$ and $R^6$ are each independently an alkyl group having 1 to 4 carbon atoms, j is an integer of 1, 2 or 3, k is an integer of 0, 1 or 2, and (j+k) is an integer of 1, 2 or 3.)
(D) a metal oxide having an average particle diameter of 5 to 200 nm (component D) determined by dynamic light scattering as described herein, wherein the content of the component A is 10 to 59.9 wt% in terms of $SiO_2$, the content of the component B is 40 to 89.9 wt% in terms of $R^1{}_mR^2{}_nSiO_{(4-m-n)/2}$, and the content of the component C is 0.1 to 18 wt% in terms of $R^4{}_jR^5{}_kSiO_{(4-j-k)/2}$ based on 100 wt% of the total of the components A to C, and the content of the component D is 0.1 to 15 parts by weight based on 100 parts by weight of the total of the components A to C.

**2.** The resin composition according to claim 1, wherein the content of the component A is 10 to 39.5 wt% in terms of $SiO_2$, the content of the component B is 60 to 89.5 wt% in terms of $R^1{}_mR^2{}_nsiO_{(4-m-n)/2}$, the content of the component C is 0.5 to 13 wt% in terms of $R^4{}_jR^5{}_kSiO_{(4-j-k)/2}$, and the content of the component D is 0.1 to 15 parts by weight based on 100 parts by weight of the total of the components A to C.

**3.** The resin composition according to claim 1, wherein the metal oxide (component D) is zinc oxide, cerium oxide or titanium oxide.

**4.** The resin composition according to claim 1, wherein the metal oxide (component D) is zinc oxide, cerium oxide or titanium oxide which is covered with an alumina layer, a zirconia layer, a silicon compound layer or a laminate thereof.

**5.** The resin composition according to claim 1, wherein the metal oxide (component D) is prepared by dispersing slurry containing a metal oxide dispersed in water or an organic solvent by means of a medium mill filled with a medium having an average particle diameter of not more than 100 $\mu$m.

**6.** An organosiloxane resin coating composition comprising the resin composition of claim 1 and an alcohol having 1 to 6 carbon atoms and having a solids content of 5 to 70 wt%.

**7.** The resin coating composition according to claim 6 which further comprises 0.01 to 10 parts by weight of a curing catalyst (component E) based on 100 parts by weight of the total of the components A to C.

**8.** A laminate comprising a substrate, a first layer obtained by thermosetting an acrylic resin composition, and a second layer obtained by thermosetting the resin composition of claim 1, wherein they are formed in this order.

**9.** The laminate according to claim 8, wherein the contact angle of water on the surface of the second layer is 85° or more.

**10.** The laminate according to claim 8 which further comprises a colored layer, wherein the substrate, the colored layer, the first layer and the second layer are formed in this order.

**11.** The laminate according to claim 8 which further comprises a colored layer, wherein the substrate, the first layer, the second layer and the colored layer are formed in this order.

## Patentansprüche

**1.** Organosiloxan-Harzzusammensetzung, umfassend:

(A) kolloidales Silica (Komponente A);
(B) ein hydrolysiertes und kondensiertes Produkt eines Alkoxysilans, dargestellt durch die folgende Formel (B) (Komponente B):

$$R^1{}_mR^2{}_nSi(OR^3)_{4-m-n} \qquad (B)$$

(wobei $R^1$, $R^2$ und $R^3$ jeweils unabhängig eine Alkylgruppe mit 1 bis 4 Kohlenstoffatomen sind, m und n jeweils unabhängig eine ganze Zahl von 0, 1 oder 2 sind und (m+n) eine ganze Zahl von 0, 1 oder 2 ist.)
(C) ein hydrolysiertes und kondensiertes Produkt eines Alkoxysilans, dargestellt durch die folgende Formel (C) (Komponente C):

$$R^4_jR^5_kSi(OR^6)_{4-j-k} \qquad (C)$$

(wobei $R^4$ eine Arylgruppe mit 6 bis 12 Kohlenstoffatomen oder eine Alkylgruppe mit 1 bis 20 Kohlenstoffatomen, die mit einem Fluoratom substituiert ist, ist, $R^5$ und $R^6$ jeweils unabhängig eine Alkylgruppe mit 1 bis 4 Kohlenstoffatomen sind, j eine ganze Zahl von 1, 2 oder 3 ist, k eine ganze Zahl von 0, 1 oder 2 ist und (j+k) eine ganze Zahl von 1, 2 oder 3 ist.
(D) ein Metalloxid, das einen durchschnittlichen Partikeldurchmesser von 5 bis 200 nm hat, (Komponente D), bestimmt durch dynamische Lichtstreuung, wie hierin beschrieben,
wobei der Gehalt der Komponente A 10 bis 59,9 Gew.-% in Bezug auf $SiO_2$ ist, der Gehalt der Komponente B 40 bis 89,9 Gew.-% in Bezug auf $R^1_mR^2_nSiO_{(4-m-n)/2}$ ist und der Gehalt der Komponente C 0,1 bis 18 Gew.-% in Bezug auf $R^4_jR^5_kSiO_{(4-j-k)/2}$ ist, basierend auf 100 Gew.-% der Gesamtheit der Komponenten A bis C, und der Gehalt der Komponente D 0,1 bis 15 Gewichtsteile ist, basierend auf 100 Gewichtsteilen der Gesamtheit der Komponenten A bis C.

2. Harzzusammensetzung gemäß Anspruch 1, wobei der Gehalt der Komponente A 10 bis 39,5 Gew.-% in Bezug auf $SiO_2$ ist, der Gehalt der Komponente B 60 bis 89,5 Gew.-% in Bezug auf $R^1_mR^2_nSiO_{(4-m-n)/2}$ ist, der Gehalt der Komponente C 0,5 bis 13 Gew.-% in Bezug auf $R^4_jR^5_kSiO_{(4-j-k)/2}$ ist und der Gehalt der Komponente D 0,1 bis 15 Gewichtsteile ist, basierend auf 100 Gewichtsteilen der Gesamtheit der Komponenten A bis C.

3. Harzzusammensetzung gemäß Anspruch 1, wobei das Metalloxid (Komponente D) Zinkoxid, Ceroxid oder Titanoxid ist.

4. Harzzusammensetzung gemäß Anspruch 1, wobei das Metalloxid (Komponente D) Zinkoxid, Ceroxid oder Titanoxid, welches mit einer Aluminiumoxidschicht, einer Zirkoniumoxidschicht, einer Siliciumverbindungsschicht oder einem Laminat davon überzogen ist, ist.

5. Harzzusammensetzung gemäß Anspruch 1, wobei das Metalloxid (Komponente D) durch Dispergieren einer Aufschlämmung, die ein Metalloxid, das in Wasser oder einem organischen Lösungsmittel dispergiert ist, enthält, mit einer Medium-Mühle, die mit einem Medium, das einen durchschnittlichen Partikeldurchmesser von nicht mehr als 100 $\mu$m hat, gefüllt ist, hergestellt wird.

6. Organosiloxanharzbeschichtungszusammensetzung, umfassend die Harzzusammensetzung aus Anspruch 1 und einen Alkohol, der 1 bis 6 Kohlenstoffatome hat, und die einen Feststoffgehalt von 5 bis 70 Gew.-% hat.

7. Harzbeschichtungszusammensetzung gemäß Anspruch 6, die weiterhin 0,01 bis 10 Gewichtsteile eines Aushärtungskatalysators (Komponente E), basierend auf 100 Gewichtsteilen der Gesamtheit der Komponenten A bis C, umfasst.

8. Laminat, umfassend ein Substrat, eine erste Schicht, erhalten durch Wärmehärten einer acrylischen Harzzusammensetzung, und eine zweite Schicht, erhalten durch Wärmehärten der Harzzusammensetzung aus Anspruch 1, wobei sie in dieser Reihenfolge gebildet werden.

9. Laminat gemäß Anspruch 8, wobei der Kontaktwinkel von Wasser an der Oberfläche der zweiten Schicht 85° oder mehr ist.

10. Laminat gemäß Anspruch 8, welches weiterhin eine farbige Schicht umfasst, wobei das Substrat, die farbige Schicht, die erste Schicht und die zweite Schicht in dieser Reihenfolge gebildet werden.

11. Laminat gemäß Anspruch 8, welches weiterhin eine farbige Schicht umfasst, wobei das Substrat, die erste Schicht, die zweite Schicht und die farbige Schicht in dieser Reihenfolge gebildet werden.

## Revendications

**1.** Composition de résine d'organosiloxane comprenant :

(A) de la silice colloïdale (composant A) ;
(B) un produit hydrolysé et condensé d'un alcoxysilane représenté par la formule (B) suivante (composant B) :

$$R^1{}_mR^2{}_nSi(OR^3)_{4-m-n} \qquad (B)$$

(dans laquelle $R^1$, $R^2$ et $R^3$ sont chacun indépendamment un groupe alkyle ayant de 1 à 4 atomes de carbone, m et n sont chacun indépendamment un nombre entier de 0, 1 ou 2, et (m + n) est un nombre entier de 0, 1 ou 2.)
(C) un produit hydrolysé et condensé d'un alcoxysilane représenté par la formule (C) suivante (composant C) :

$$R^4{}_jR^5{}_kSi(OR^6)_{4-j-k} \qquad (C)$$

(dans laquelle $R^4$ est un groupe aryle ayant de 6 à 12 atomes de carbone ou un groupe alkyle ayant de 1 à 20 atomes de carbone qui est substitué par un atome de fluor, $R^5$ et $R^6$ sont chacun indépendamment un groupe alkyle ayant de 1 à 4 atomes de carbone, j est un nombre entier de 1, 2 ou 3, k est un nombre entier de 0, 1, ou 2, et (j + k) est un nombre entier de 1, 2 ou 3.)
(D) un oxyde métallique ayant un diamètre de particule moyen de 5 à 200 nm (composant D) déterminé par diffusion de lumière dynamique comme décrit ici,
dans laquelle la teneur du composant A est 10 à 59,9 % en poids en termes de $SiO_2$, la teneur du composant B est 40 à 89,9 % en poids en termes de $R^1{}_mR^2{}_nSiO_{(4-m-n)/2}$, et la teneur du composant C est 0,1 à 18 % en poids en termes de $R^4{}_jR^5{}_kSiO_{(4-j-k)/2}$ d'après 100 % en poids du total des composants A à C, et la teneur du composant D est 0,1 à 15 parties en poids par rapport à 100 parties en poids du total des composants A à C.

**2.** Composition de résine selon la revendication 1, dans laquelle la teneur du composant A est 10 à 39 % en poids en termes de $SiO_2$, la teneur du composant B est 60 à 89,5 % en poids en termes de $R^1{}_mR^2{}_nSiO_{(4-m-n)/2}$, la teneur du composant C est 0,5 à 13 % en poids en termes de $R^4{}_jR^5{}_kSiO_{(4-j-k)/2}$, et la teneur du composant D est 0,1 à 15 parties en poids par rapport à 100 parties en poids du total des composants A à C.

**3.** Composition de résine selon la revendication 1, dans laquelle l'oxyde métallique (composant D) est l'oxyde de zinc, l'oxyde de cérium ou l'oxyde de titane.

**4.** Composition de résine selon la revendication 1, dans laquelle l'oxyde métallique (composant D) est l'oxyde de zinc, l'oxyde de cérium ou l'oxyde de titane qui est couvert d'une couche d'alumine, d'une couche de zircone, d'une couche de composé silicium ou d'un stratifié de celles-ci.

**5.** Composition de résine selon la revendication 1, dans laquelle l'oxyde métallique (composant D) est préparé par dispersion d'une boue contenant un oxyde métallique dispersé dans de l'eau ou un solvant organique au moyen d'un mélangeur de milieu rempli d'un milieu ayant un diamètre de particule moyen non supérieur à 100 $\mu$m.

**6.** Composition de revêtement de résine d'organosiloxane comprenant la composition de résine de la revendication 1 et un alcool ayant de 1 à 6 atomes de carbone et ayant une teneur en matières sèches de 5 à 70 % en poids.

**7.** Composition de revêtement de résine selon la revendication 6, qui comprend en outre de 0,01 à 10 parties en poids d'un catalyseur de durcissement (composant E) par rapport à 100 parties en poids du total des composants A à C.

**8.** Stratifié comprenant un substrat, une première couche obtenue par thermodurcissement d'une composition de résine acrylique, et une seconde couche obtenue par thermodurcissement de la composition de résine de la revendication 1, dans lequel ils sont formés dans cet ordre.

**9.** Stratifié selon la revendication 8, dans lequel l'angle de contact de l'eau sur la surface de la seconde couche est 85° ou plus.

**10.** Stratifié selon la revendication 8, qui comprend en outre une couche colorée, dans lequel le substrat, la couche colorée, la première couche et la seconde couche sont formés dans cet ordre.

11. Stratifié selon la revendication 8, qui comprend en outre une couche colorée, dans lequel le substrat, la première couche, la seconde couche et la couche colorée sont formés dans cet ordre.

Fig. 1

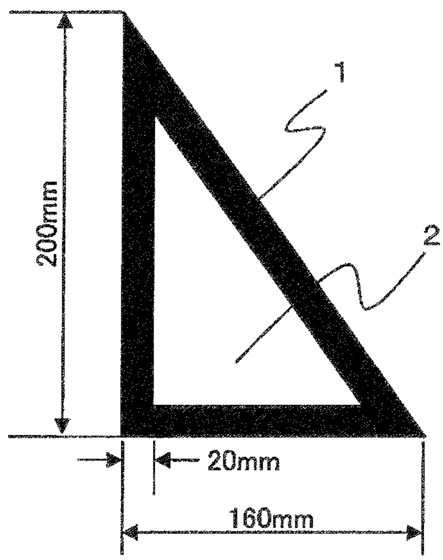

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62169832 A
- JP 59109528 A
- JP 2002206042 A
- JP 2004131549 A
- JP 2004018811 A
- JP 3648280 B
- JP 2003306605 A
- JP 2004238418 A
- JP 2006070078 A
- JP 2006104476 A
- JP 2008094956 A
- JP 2008231304 A
- JP 2002348534 A
- JP 57021476 A
- US 4316033 A
- US 4349602 A
- JP 2004026979 A
- WO 2007105741 A